# EUROPÄISCHE PATENTSCHRIFT

(11) **EP 3 724 869 B1**
(45) Veröffentlichungstag und Bekanntmachung des Hinweises auf die Patenterteilung: **02.03.2022**
(21) Anmeldenummer: 18852748.5
(22) Anmeldetag: 10.12.2018
(51) Int. Cl.: G06F 21/46, G09C 1/04, H04L 9/38

(54) **TRAGBARER, MECHANISCHER PASSWORTGENERATOR MIT DETERMINIERTEM SPEICHER**
PORTABLE MECHANICAL PASSWORD GENERATOR WITH DETERMINED STORAGE CAPACITY
GÉNÉRATEUR DE MOTS DE PASSE MÉCANIQUE PORTABLE À MÉMOIRE DÉTERMINÉE

(30) Priorität: 11.12.2017 CH 15002017
(43) Veröffentlichungstag der Anmeldung: 21.10.2020
(73) Patentinhaber: Martin, Lukas, 4443 Wittinsburg (CH)
(72) Erfinder: Martin, Lukas, 4443 Wittinsburg (CH)
(74) Vertreter: Leimgruber, Fabian Alfred Rupert
(86) Internationale Anmeldenummer: PCT/CH2018/000050
(87) Internationale Veröffentlichungsnummer: WO 2019/113715

(56) Entgegenhaltungen:
- DE-U1-202013 002 454
- US-A1- 2009 080 652

## Beschreibung

### 1.2. Technisches Gebiet

Die Erfindung betrifft eine tragbare, kleine Mechanik zur Erzeugung und Speicherung von Passworten. Im Fokus stehen Passworte, die zur Verwendung von digitalen Dienstleistungen wie Email-Konti, Social Media-Zugängen oder anderen Passwortgeschützten Bereichen, wie Gebäudezugängen etc. eingesetzt werden.

Die Erfindung kann in die Gebiete der Mikromechanik oder Uhrenkomplikationen eingeteilt werden.

### 1.3. Stand der Technik

Täglich nutzen Menschen digitale Dienste und müssen sich vorweg mit einem Benutzernamen und einem Passwort anmelden, um der missbräuchlichen Verwendung ihres Accounts (Zugang zu einem Dienst) oder Dienst-Kontos vorzubeugen. Dabei verlangen die Dienst-Anbieter sichere Passworte mit einer bestimmten Zeichen-Anzahl in komplexer Komposition. Zusätzlich sollen die Passworte in regelmäßigen Abständen geändert werden und keine naheliegenden, von der Person oder deren Umfeld oder Lebensgewohnheiten ableitbaren Worte, Nummern oder Zeichenfolgen aufweisen.

Es sind verschiedenste auf Software basierende Programme bekannt, die Passworte verwalten, teilweise ist eine Passwortspeicherung in Betriebssystemen von Computern bereits implementiert. Im materiellen Sinne existieren verschiedene Kalender, Notizbücher, und Ähnliches aus Papier in gefasster Form oder Karteikartensysteme, welche für die handschriftliche Archivierung von Passworten Verwendung finden.

### Den Software-basierten Passwortverwaltungen ist ein gravierender Nachteil gemeinsam:

Computersysteme und die darauf laufenden Betriebssysteme sind nicht transparent, sind von Menschen implementiert und darum auch fehlerhaft. Die Realität zeigt in erschreckender Regelmäßigkeit, dass Computersysteme "gehackt" werden und ganze Passwort-Tabellen inklusive Benutzernamen, Adressen und Metadaten illegal gehandelt werden oder in fremde Hände gelangen. Manche Software-Entwickler sagen zu diesem Thema: "Traue keiner Software, die du nicht selber geschrieben hast!"

Zusätzlich erschwert wird die sichere Verwaltung der Passworte durch die Vernetzung der einzelnen digitalen Geräte wie Privat-Computer, Geschäfts-PC, Smartphone, Smart-Watch und andere sogenannte intelligente Geräte im Umfeld eines Menschen. Dazu kommen die Koppelungen der eigenen, eben beschriebenen Informationstechnologie mit Geräten von Familienmitgliedern oder unbekannten Personen im Umfeld eines Menschen.

Neben diesen virtuellen Aktivitäten müssen sich Menschen auch im Alltag in verschiedenster Weise eindeutig identifizieren. Beispielsweise: Gebäudezugänge, Tiefgaragen, Zahlenschlösser, Systemzugänge bei stand-alone Maschinen verschiedenster Gattung. Als Gedächtnisstütze dafür verwenden Menschen die eben genannten Software-basierten Passwortverwaltungen, beispielsweise das eigene Smartphone und gehen dabei erneut die aufgezählten Risiken ein.

US 2009/0080652 A1 zeigt einen tragbaren, mechanischen Passwortgenerator, der auf verschiedene Benutzereinstellungen verschiedene Passwörter anzeigt. Der Benutzer kann durch verstellen mechanischer Komponenten am Passwortgenerator neue Passwörter erzeugen oder alte wieder herstellen. Der Passwortgenerator besteht aus einer oder zwei Halteplatte zum Halten gegeneinander verschiebbarer paralleler Streifen oder konzentrischer drehbaren Scheiben unterschiedlicher Grösse, welche mit Zeichen und Ziffern versehen sind. Auf den Halteplatten selbst sind bei den verschiedenen Einstellpositionen der Streifen oder Scheiben ebenfalls Zeichen und Ziffern vermerkt. Durch verschieben der Streifen oder Scheiben in Bezug auf die auf den Halteplatten vermerkten Zeichen oder Ziffern, so dass eine bestimmte Zeichenfolge eingestellt ist, kann eine Reihe von assoziierten Zeichenfolgen (Passwörtern) abgelesen werden. Das Dokument DE 20 2013 002 454 U1 zeigt ebenfalls einen tragbaren, mechanischen Passwortgenerator. Dieser Passwortgenerator umfasst mehrere, um eine Achse drehbare, konzentrischer, gleich grosser Trommeln. Die Trommeln sind auf ihrer Aussenseite mit Zeichen versehen. Sie sind so auf einer Achse hintereinander angeordnet, dass sie gegeneinander verdrehbar sind. Stellt der Benutzer ein sogenanntes "Master-Passwort", d.h. eine von ihm definierte Zeichenfolge mit den drehbaren Trommeln ein, kann er eine Vielzahl von assoziierten Zeichenfolgen, sogenannten "Slave-Passwörtern" ablesen. Durch einen Fixiermechanismus sind die drehbaren Trommeln auf ein bestimmte Master-Zeichenfolge fixierbar.

### 1.4 Darstellung der Erfindung

Die unter Punkt 1.3. Stand der Technik aufgezeigten Probleme beim Speichern und Verwalten von Passworten, die Anforderungen an die Zusammensetzung der Passworte und die Forderung, die Passworte regelmässig zu ändern und dabei jeweils wieder neue komplexe Passworte zu generieren, löst diese Erfindung, fortan in diesem Text auch als Passwortgenerator bezeichnet, durch das Zusammenspiel von sechs mechanischen Baugruppen, die zusammen die Erfindung als mechanische, tragbare Einheit ausmachen und jede für sich, als Baugruppe jeweils eine gewünschte Funktion zur Lösung der Problemstellung übernehmen.

Damit die Problemstellung nicht nur gemäss dem Anforderungsprofil, sondern auch im praktischen, alltäglichen Sinne effektiv ist, bewegen sich die Aussenmasse der Gesamtkonstruktion idealerweise in einem Hüllen-Quader von 50mm Länge, 50mm Breite und 15mm Höhe, können aber bei Bedarf sowohl vergrössert als auch verkleinert werden. Für die Umsetzung und Ausarbeitung der einzelnen Komponenten kommen die in der Fein- und Mikromechanik üblichen Materialien, insbesondere Metalle, Glas und Kunststoffe in Frage. Die Erfindung kann in ihrer konkreten Ausführung auch nur aus den ersten drei Baugruppen mit den Bezeichnungen Verwischerwerk 13, Trommelwerk 14 und Stellwerk 15 bestehen. In dieser reduzierten Konstitution fällt eine Funktion, welche die Erfindung in ihrer Gesamtheit, bestehend aus allen sechs Baugruppen, leisten kann, weg.

Der Passwortgenerator bringt nach der Einstellung eines Haupt- oder Zugangscodes, der manuell durch Betätigung der Bedienungselemente, in seiner Konstitution willkürlich, nur beschränkt durch die Zeichenvielfalt der einzelnen Ziffern, eingestellt wird, im gegenüberliegenden Anzeigebereich ein Passwort zur Anzeige. Der frei gewählte Zugangscode besteht aus einer bestimmten Anzahl Zeichenstellen, in der Ausführungsform, welche später in dieser Schrift folgt, sind es sechs Zeichenstellen. Je nach Ausführung der Erfindung kann pro Zeichenstelle des Zugangscodes aus unterschiedlich vielen, verschiedenen Zahlen und Buchstaben ausgewählt werden. Da sich die Permutationen des Zugangscodes über die Multiplikation der einzelnen Anzahlen der verschiedenen, auswählbaren Zeichen pro Zeichenstelle errechnen, wird die Menge der möglichen, einstellbaren Kombinationen je nach Anzahl Zeichenstellen und Zeichen pro Zeichenstelle der Erfindungsausführung, sehr groß. Bei der Betrachtung des Passwortgenerators von oben, wird der Zugangscode in einem horizontal ausgerichteten Feld, unterteilt in seine einzelnen Zeichenstellen, üblicherweise auf der linken Seite angezeigt und durch den geometrischen Abstand zum angezeigten, mechanisch generierten Passwort klar getrennt. Das Deckblatt hat dafür die passenden Aussparungen und erleichtert das Kontrollieren des eingestellten Zugangscodes und das Ablesen des erzeugten Passwortes, indem es die darunterliegende Mechanik verdeckt und einen Kontrast zu den Zeichen vom Zugangscode und den Zeichen des Passworts bildet.

Für die manuelle Einstellung des Zugangscodes hat die Erfindung seitlich hervorstehende kleine Druckknöpfe und ein kreisförmiges Stellrad, das sich bei Betrachtung von oben rund um das Deckblatt, als räumlich am höchsten gelegenes Bedienungselement hervorhebt. Die Drehachsen der einzelnen Druckknöpfe stehen alle senkrecht zur Drehachse des Stellrades. Das Stellrad ist das Manipulations-Element, das die mechanischen Vorgänge, welche manuell und willkürlich vorgenommen werden können, vermittelt und antreibt. Jeder Zifferstelle des Zugangscodes ist ein seitlich, am Gehäuserahmen nach außen geführter kleiner Druckknopf zugeordnet. Im gedrückten Zustand vermittelt er die mechanische Koppelung zum Stellrad und durch die Drehung am Stellrad erscheinen in der entsprechenden Zeichenstelle des Zugangscodes die Zeichen, die einstellbar sind. Damit keine Zwischenpositionen eingestellt werden, wird durch eine Rasterung sichergestellt, dass immer ein komplettes Zeichen in der Zeichenstelle einrastet. Für die Einstellung einer weiteren Zeichenstelle des Zugangscode muss ein anderer kleiner Druckknopf gedrückt werden. Dadurch wird der bisher gedrückte Druckknopf mechanisch gelöst und er springt radial nach außen. Damit ist die bisherige Koppelung zum Stellrad wieder unterbrochen und die Koppelung zum Stellrad besteht nun in der Position des aktuell gedrückten Druckknopfes und der mit ihm assoziierten Zeichenstelle des Zugangscodes. Auf diese Weise kann der Zugangscode Zeichen für Zeichen durch die Betätigung der kleinen Druckknöpfe, es gibt so viele, wie es Zeichenstellen für den Zugangscode hat, und die Drehung am Stellrad, eingestellt werden. Während des gesamten Vorgangs der Einstellung des Zugangscodes, stellt sich durch die Generator-Mechanik, angetrieben durch die Drehungen am Stellrad, zugleich ein erstes Passwort, das Startpasswort ein. Dieses wird gegenüber dem Zugangscode zur Anzeige gebracht und besteht aus einer Kombination mindestens gleich vieler Zeichenstellen, wie sie der Zugangscode hat, idealerweise aber deren acht oder mehr, um eben die Anforderung, ein komplexes Passwort zu haben, zu erfüllen. In der vorliegenden Ausführung der Erfindung hat der Zugangscode sechs Zeichen, resp. Zahlen und das Passwort besteht aus acht Zeichen, resp. Zahlen. Mit der Einstellung des Zugangscodes wird die Generatormechanik an einen Startpunkt des determinierten Passwortspeichers gesetzt, von dem aus nun eine Vielzahl von weiteren Passworten generiert oder eben im Sinne des determinierten Speichers, abgefragt werden können. Der mechanische Speicher ist determiniert, weil die Generatormechanik zu jedem eingestellten Zugangscode mit entsprechendem Startpasswort in der Folge, durch Drehen am Stellrad, immer die selben, weiteren Passworte in immer gleicher Reihenfolge zur Anzeige bringt. Dazu muss der zentrale, seitlich am Gehäuserahmen nach außen geführte, große Druckknopf gedrückt werden. Dadurch wird der aktuell zuletzt gedrückte kleine Druckknopf zur Einstellung des Zugangscodes gelöst und die Koppelung des Drehrades mit der Generatormechanik vermittelt. Durch die Koppelung der Generator-Mechanik wirken sich Drehungen nun auf alle Zeichenstellen des Passwortes aus. Ab diesem Zeitpunkt hat der Zugangscode keine Relevanz mehr, in der Folge haben alle mechanischen Vorgänge nur noch die Erzeugung weiterer Passworte zur Folge. Mit gedrücktem großem Druckknopf hat die Drehung am Stellrad einen mechanischen Einfluss auf alle Ziffernstellen des Passwortes und des Zugangscodes. Das gesamte mechanische Karussell, das für die Veränderung aller Zeichen in den Zeichenstellen sowie des Zugangscodes, als auch des Passwortes sorgt, wird nur bei gedrücktem großem Druckknopf und anschließender Drehung am Stellrad in Bewegung gesetzt. Damit in jeder Zeichenstelle des Passwortes eine Zahl oder ein Zeichen vollständig zu sehen ist, muss das Stellrad um einen definierten Winkelgrad im Uhrzeigersinn rotiert werden. Um diesen Winkel-Wert durch manuelles Drehen am Stellrad präzise zu erreichen, sind am Stellrad Lochbohrungen eingelassen, die einen Durchblick auf den oberen Rand des darunterliegenden Gehäuserahmen ermöglichen. Auf den oberen Rand des Gehäuserahmens sind fortlaufend, mit null beginnend, mit jeder Weiteren um eins addiert, die Zahlen 0,1,2,3... eingraviert. Jede dieser Zahlen befindet sich genau bei einem Vielfachen des Winkelwerts, der eingestellt werden muss, damit bei jeder Zeichenstelle des Passworts ein Zeichen komplett und zentriert sichtbar ist. Mit jeder Winkeldrehung des Stellrades bis zu einer Zahl auf dem oberen Rand des Gehäuserahmens, wird ein gänzlich anders konstituiertes Passwort, bestehend aus Zahlen oder Zeichen mechanisch generiert. Je nach Ausführung der Erfindung kann der Drehwinkel, der zu einem neuen Passwort führt ein anderer sein, dies hängt von den Übersetzungsverhältnissen der treibenden Zahnräder ab. Üblicherweise können pro Umdrehung des Stellrades zwischen fünf und zehn verschiedene Passworte erzeugt werden. Die Anzahl der einstellbaren Passworte ist je nach Ausführung der Erfindung, im Speziellen je nach Anzahl der möglichen Zahlen resp. Zeichen pro Zeichenstelle überwältigend groß. Wird der große Druckknopf nach außen gezogen und damit die mechanische Koppelung vom Stellrad zur Drehmechanik des Passwortgenerators gelöst, so hat jede weitere Drehung des Stellrades keine Veränderung der Zeichen oder Zahlen in den Zeichenstellen des Passworts mehr zur Folge. Durch erneutes Drücken des großen Druckknopfes wird die Koppelung des Stellrades wieder vermittelt und eine Drehung des Stellrades um den Winkelwert bis zum Erreichen einer Zahl auf dem oberen Rand des Gehäuserahmens bringt wieder ein weiteres, neues Passwort zur Ansicht. Durch die Rotation um den entsprechenden Winkelwert im Gegenuhrzeigersinn kann wieder zum unmittelbar vorher eingestellten Passwort gelangt werden. Der Vorteil der Nummerierung der Drehwerte auf dem oberen Rand des Gehäuserahmens liegt in der Möglichkeit, das Passwort, welches beim Erreichen einer bestimmten Zahl auf dem Gehäuserahmen angezeigt wird, einer Situation oder einem Dienst im realen Leben zuordnen zu können. Somit könnte das angezeigte Passwort bei einer Rotation des Stellrads bis zur Zahl drei auf dem Gehäuserahmen jenes Passwort sein, das für einen email-Zugang benötigt wird und das Passwort, welches bei der Zahl fünf eingestellt ist, für die Anmeldung auf einem Arbeitscomputer Verwendung finden.

Dadurch, dass es möglich ist, verschiedene Zugangscodes willkürlich zu wählen, können ganze Passwort-Welten erzeugt werden. Für jeden Zugangscode, der willkürlich gewählt wird, sich von einem anderen unterscheidet und eingestellt wird, generiert die Mechanik wiederum fortlaufend, nach beschriebener Vorgehensweise, neue Passworte. Man kann für jeden Zugangscode, der verwendet wird, einen ganzen Block von Passworten erzeugen, die dann für einen bestimmten Bereich im Leben Verwendung finden. Somit ist es der Fantasie überlassen, wie persönliche Passworte je nach Lebensbereich in Geschäft, privat, Freunde usw. unterteilt nach Diensttypus wie email, social Media etc. strukturiert werden.

Die Erfindung sieht in einer speziellen Ausführung eine Begrenzung der Drehung des Stellrades bei 360 Grad vor. Somit kann nach der Einstellung des Zugangscodes maximal die Anzahl an Passworten generiert werden, die bis zum Ende der vollständigen Umdrehung des Stellrades um 360 Grad sichtbar werden. Ergänzend ist diese mechanische Begrenzung mit einer Rückstellfeder ausgestattet, welche das Stellrad sofort in seine Ausgangsposition zurückdreht, sobald es losgelassen und nicht mehr auf der aktuellen Position festgehalten wird. Diese Funktion soll das aktuell sichtbare Passwort wieder verschwinden lassen, damit Personen im Umfeld keine Möglichkeit haben, es beiläufig abzulesen, wenn vergessen wird, nach Verwendung des Passworts, das Stellrad soweit zu verdrehen, bis das Passwort nicht mehr sichtbar ist. Diese Funktion dient in einer speziellen Ausführung der Erfindung als Unterstützung, um Passworte verborgen zu halten. Die beschriebene Vorgehensweise, via eingestelltem Zugangscode zum Startpasswort zu gelangen und dann durch Rotation am Stellrad weitere Passworte zu erzeugen, ist ein praktisches und beliebig wiederholbares Prinzip. Es ist durch die spezielle Anordnung der mechanischen Komponenten jederzeit und absolut unabhängig der aktuellen Anzeigesituation von Zugangscode oder Passwort möglich, einen beliebigen Zugangscode neu einzustellen und den entsprechenden Passwortblock zu verwenden. Es kann zu jedem Zeitpunkt ein kleiner Druckknopf, der einer Zeichenstelle des Zugangscodes zugeordnet ist, gedrückt werden und durch Drehung am Stellrad ein Zeichen oder eine Zahl gesetzt werden, bis ein Zugangscode eingestellt ist, der als Zugang zu einem Passwortblock definiert wurde. Das bedeutet, dass es nicht notwendig ist, die Mechanik zuerst in eine Nullstellung zu versetzen oder in einer Form zurückzudrehen oder zurückzustellen.

Um zu verhindern, dass bei identischer Bauweise und Produktion einer Vielzahl dieses Passwortgenerators ein beliebig gewählter Zugangscode auf allen produzierten Geräten das gleiche Startpasswort und die gleichen Folgepassworte generiert werden, verfügt die Erfindung über eine weitere Baugruppe, die eine Individualisierung der einzelnen produzierten Geräte erlaubt. Dies geschieht durch die Beeinflussung der Mechanik, welche die einzelnen Zeichen im Passwort erzeugt. So ist es möglich, dass zwei produzierte Geräte bei einem identischen Zugangscode nicht dieselben Startpassworte anzeigen und sich auch die weiteren, durch Drehung am Stellrad zu erzeugenden Passworte von Gerät zu Gerät unterscheiden. Dazu müssen, bei Betrachtung der Erfindung von oben, die beiden links vom Gehäuse- rahmen hervorstehenden Schieber auf dem kürzeren Wege aufeinander zu bewegt werden, bis sie sich berühren. Diese mechanische Bewegung drückt unterhalb der mechanischen Ebene, welche für die Besetzung der einzelnen Zeichenstellen zuständig ist, eine Vielzahl von Stempeln nach oben, resp. zieht diese Stempel nach unten. Je nachdem, ob ein solcher Stempel nun oben oder eben unten ist, werden die Zeichen zur Erzeugung des Passwortes bei der Drehung am Stellrad anders gesetzt. Dies passiert durch die beeinflusste Rotation der kleinen Trommeln, welche auf sich die verschiedenen Zahlen oder Zeichen zur Darstellung der Passworte aufgebracht haben. In der Ausführung später in dieser Schrift, sind es total sechs Zahlen oder Zeichen, die auf der Mantelfläche eines Zeichen-Zylinders (Trommel) eingraviert sind. Der Rotationsgrad dieser Zeichen-Zylinder bestimmt, welches Zeichen, resp. welche Zahl in der entsprechenden Zeichenstelle beim Passwort zu sehen ist. Die Zeichen-Trommeln, es gibt je nach Zeichenstelle unterschiedlich viele, drehen sich auf einem kreisförmigen Orbit und bewegen sich bei ihrer Drehung innerhalb des Halbkreises von 270 Grad bis 90 Grad (bei einer Uhr von 21 Uhr bis 15 Uhr) an der Hälfte der gesamten Stempelstellen des ganzen Kreises vorbei. In der Ausführung der Erfindung in dieser Schrift gibt es zwölf Stempelstellen, davon befinden sich also sechs entlang des Halbkreises von 21 Uhr bis 15 Uhr. Ist ein Stempel gesetzt und nach oben gestoßen worden, so wird der Zeichen-Zylinder auf seiner Bewegung auf der Kreisbahn, beim Passieren der Stempelstelle um einen Winkel α (Alpha) rotiert. Dieser Drehwert ist genau so groß, dass das bisher nach oben angezeigte, im Zenit liegende Zeichen oder Zahl um eine Stelle weitergedreht wird und das nächst folgende Zeichen oben liegt. Wenn ein Stempel an der entsprechenden Stempelstelle nach unten gezogen wurde, dann wird der Zeichen-Zylinder an dieser Stelle nicht rotiert und es verbleibt dasselbe Zeichen in der Zenit-Position, das vor dem Passieren der Stempelstelle bereits an dieser Position war. Die Stempel-Mechanik, bestehend aus dem Kodierwerk und dem Stempelwerk kann auf Grund ihrer Bauweise eine enorme Anzahl verschiedener Stempelbilder erzeugen. Total sind auf der gesamten Kreisbahn von 360 Grad immer die Hälfte (50%) aller Stempel in der gesetzten, also nach oben geschobenen Position. Diese Anzahl gesetzter Stempel muss immer der Anzahl Zeichen und Zahlen, die auf einem Zeichenzylinder aufgebracht sind, entsprechen. In der Ausführung der Erfindung in dieser Schrift sind es sechs Zeichen pro Zeichenzylinder. Deshalb müssen in diesem Ausführungsfall auch sechs Stempel auf dem gesamten 360 Grad Kreis pro Ziffemstelle gesetzt, also nach oben geschoben sein. Nur durch diese Übereinstimmung von Anzahl Zeichen pro Zeichenzylinder und Anzahl gesetzter Stempel pro Vollkreis, ist sichergestellt, dass jeder Zeichenzylinder pro kompletter Umdrehung auf dem Ziffernstellen-Kreis, also dem Umlauforbit insgesamt so oft durch einen Stempel weiter rotiert wird, bis er an einem Ausgangspunkt kurz vor der Position 270 Grad (21 Uhr) wieder dasselbe Zeichen oder Zahl in der Zenit-Position hat, wie zu Beginn der Umdrehung auf dem Ziffemstellenkreis. Es existieren für jeden Orbit-Kreis, auf dem die Zeichenzylinder ihre Kreisbahnen drehen doppelt so viele Stempelpunkte, die zu passieren sind, wie es Zeichen auf einem Zeichenzylinder hat. In der Ausführung später in dieser Schrift sind es sechs Zeichen pro Zeichenzylinder und darum total zwölf Stempelstellen pro Umlaufbahn. Die Stempelmechanik, bestehend aus dem Kodierwerk und dem Stempelwerk ist so ausgelegt, dass pro Umlaufbahn immer die Hälfte der Stempel nach oben gedrückt werden, aber je nach mechanischer Einstellung der Stempelmechanik sind es andere Stempelpunkte, die gesetzt werden. Durch diese Vorgaben ist die oben genannte Forderung nach einer kompletten Umdrehung der Zeichenzylinder (um ihre eigene Drehachse) pro Kreisumlauf gewährleistet und es kann die Forderung der individuellen Unterschiedlichkeit der produzierten Geräte Rechnung getragen werden, weil die Stempelmechanik veränderlich ist. Die dafür verantwortliche Baugruppe, das Kodierwerk, ist dazu aus konzentrisch angeordneten Stempelschablonen in Ringform aufgebaut. Durch die Drehung der innersten Stempelschablone des Kodierwerks, wird das Schablonen-Karussell in Rotation versetzt. Dieses Schablonen-Karussell besitzt gleich viele Schablonen-Ringe, wie es Zeichenstellen im Passwort hat. Die Anzahl der Schablonen-Ringe stimmt somit mit der Anzahl der Kreis-Orbits, auf denen die Zeichenzylinder einer Zeichenstelle drehen, überein. Jeder Schablonen-Ring besitzt für jede entsprechende, oberhalb von ihr gelegene Stempelstelle einen Bolzen oder einen Hohlzylinder. Wenn auf der Schablone für die entsprechende Stempelstelle ein Bolzen vorliegt, wird durch die manuelle Betätigung der seitlichen Schieber und der damit verbundenen Anhebung des Kodierwerks, der darüber liegende Stempel nach oben gedrückt. Durch einen Hohlzylinder an derselben Stelle auf der Schablone, wird ein darüber liegender Stempel über den Stempelmechanismus nach unten gezogen. Die einzelnen Schablonen-Ringe sind im Sinne eines mechanischen Zählers über Mitnehmer-Haken miteinander gekoppelt und es werden im Laufe der Benutzungsdauer der Erfindung, durch die Drehung, beginnend am innersten der Schablonen-Ringe alle möglichen Konstellationen an unterschiedlichen Stempelmustem erzeugt. So entsteht je nach Rotationsgrad der einzelnen kreisförmigen Stempelschablonen des Kodierwerks eine unterschiedliche Konfiguration von Bolzen und Hohlzylindern und somit ein entsprechend variables Muster an gesetzten Stempeln oder nicht gesetzten Stempeln. Weil ein Zeichenzylinder auf seinem Weg von der Position kurz vor 270 Grad (21 Uhr) bis zur Passwort-Anzeigeposition bei 90 Grad (15 Uhr) an der Hälfte aller Stempelpositionen vorbei dreht und je nach Konstitution der entsprechenden Stempelschablone unterschiedlich viele Stempel bis zu dieser Weg-Position gesetzt sind, dreht sich der Zeichenzylinder entsprechend oft und zeigt je nach Stempelmuster ein anderes Zeichen oder Zahl in der Zenit-Position an. In identischer Weise gilt dies auch für die Zeichen-Zylinder der anderen Zeichenstellen-Kreise. Die Anzahl der Permutationen in diesem Schablonen-Karussell ergibt sich aus der Exponentialfunktion mit der Anzahl Bolzen als Basis und der Anzahl der Schablonen-Ringe, resp. Anzahl Zeichenstellen des Passworts im Exponent. In der Ausführung der Erfindung in dieser Schrift sind es sechs hoch acht, also 1'679'616 (ca. 1,6 Mio.) mögliche Konstellationen von gesetzten Bolzen über die insgesamt acht Schablonen-Ringe.

Die stetige Veränderung der Stempelmuster durch die Drehung des Schablonen-Karussells im Kodierwerk wird durch ein Masse-Pendel angetrieben. Dieses ist mechanisch mit dem innersten Stempelschablonen-Ring verbunden und bewegt sich in einer zur Ebene des Schablonen-Karussell komplanaren Ebene, unterhalb des Kodierwerks. Das Pendel wird durch die wirkenden Beschleunigungskräfte bei der natürlichen Bewegung der Person, welche den Passwortgenerator mit sich führt, in Bewegung versetzt. Die mechanische Anbindung des Pendels an den innersten Stempelschablonen-Ring ist mit einer Kupplung versehen, welche unabhängig von der Rotationsrichtung des Pendels, immer eine gleichsinnige Drehung am Kodierwerk vermittelt. Dies soll verhindern, dass sich die Konstellationen der Stempelschablonen im Kodierwerk nur in einem bestimmten Bereich der möglichen Permutationen bewegen und darum nicht stetig alle möglichen Kombinationen durchgegangen werden. Die nicht abzuschätzenden Pendelbewegungen pro Zeiteinheit sind die Basis für die Zufälligkeit der aktuellen Konstellation der Stempelschablonen.

Je nach Zeitpunkt der Betätigung der beiden Schieber aufeinander zu und somit nach der aktuellen Konstellation des Kodierwerks mit seinen Stempelschablonen, wird ein Stempelmuster zufällig aus der Gesamtanzahl der möglichen Stempelmuster nach oben auf die Stempel des Stempelwerks übertragen. Nach der Reposition der seitlichen Schieber verbleibt das Stempelmuster im Stempelwerk, bis eine wiederholte Betätigung der seitlichen Schieber den beschriebenen Prozess wiederholt und ein neues Stempelmuster zur Anwendung kommt.

Neben dem zufälligen Zeitpunkt der Betätigung der Schieber ist das gewählte Stempelmuster folglich auch noch von der Anzahl Umdrehungen des Antriebs-Pendels bis zu diesem Zeitpunkt abhängig. Zusätzlich kann bereits bei der Produktion darauf geachtet werden, dass die Zeichen und Zahlen auf den Zeichen-Zylindern unterschiedlich oder gar zufällig verteilt aufgebracht werden. Dabei können auch die ganzen Zeichen-Zylinder bei der Bestückung der Umlauf-Orbits, auf denen sie festgemacht sind, zufällig ausgewählt werden. Unter Berücksichtigung der aufgezählten Maßnahmen ist es somit sehr unwahrscheinlich, dass zwei Passwortgeneratoren beim Gebrauch im Alltag dasselbe Stempelmuster aufweisen. Neben dem Antrieb des Kodierwerks durch ein Masse-Pendel, ist es auch möglich, die Stempelschablonen durch eine andere oder bekannte Mechanik, welche durch einen Elektromotor, einen Magnetspulen-Impuls oder eine mechanische Feder angetrieben wird, in Rotation zu versetzen. Naheliegender Weise kann ein Uhrwerk zum Antrieb des Kodierwerks eingesetzt werden. Je nach Auswahl der Antriebsachse, ob Stunden-, Minuten- oder Sekunden-Achse, verändert sich die Konstellation des Kodierwerks in den entsprechenden Zeitintervallen.

Eine weitere Variante der Erfindung kommt ohne ein Masse-Pendel aus. In dieser Ausführung wird die Anzahl der möglichen Konstellationen der Schablonen-Ringe stark reduziert, indem die verschiedenen Schablonen-Ringe in ihrer Gesamtheit durch einen Schablonen-Scheibe ersetzt werden. Auf dieser Scheibe ist eine begrenzte Anzahl vordefinierter Stempelmuster durch unterschiedliche Anordnung der Bolzen oder Hohlzylinder aufgebracht. Über einen seitlichen Fortsatz dieser Schablonen-Scheibe, der durch die Gehäusewand nach außen geführt ist, kann an eben diesem durch manuelle Bewegung die Schablonen-Scheibe in ihrer Position verändert werden. Diese Verdrehung der Schablonen-Scheibe führt durch ein Einrastverfahren jeweils zu einer Lage der Schablonen-Scheibe, die ein neues, vom vorher eingestellten Stempelmuster verschiedenes Stempelmuster erzeugt. Wie beim Verfahren mit dem Schablonen-Karussell, wird das Stempelmuster durch das Zusammenführen der seitlichen Schieber und der folgenden Anhebung des Kodierwerks auf die einzelnen Stempel des Stempelwerks übertragen. Der Vorteil dieser Ausführung der Erfindung liegt in einer begrenzten Anzahl auswählbarer, aber in sich nicht veränderbaren Stempelmuster. Jedes der zur Verfügung stehenden Stempelmuster kann willkürlich ausgewählt werden. So ist es möglich, bei der Umstellung von Passworten die bisherigen Passworte ebenfalls noch zu haben. Dazu werden neue Passworte über ein anderes Stempelmuster generiert, als jenes, das für die bisher verwendeten Passworte zu Einsatz kam. Es wird möglich, zwischen verschiedenen Stempelmustern und somit Passwort-Welten zu wechseln, ohne dass der Mechanismus, wie er es in der Standard-Ausführung der Erfindung tut, bei Betätigung der seitlichen Schieber stets ein komplett neues Stempelmuster erzeugt und eine willkürliche Rückkehr zum bisherigen Stempelmuster ausgeschlossen ist.

### 1.5. Aufzählung der Zeichnungen

- Zeichnung 1:: **Übersicht von oben** Zeigt die Erfindung von oben mit allen relevanten Anzeigen und Bedienungselementen.

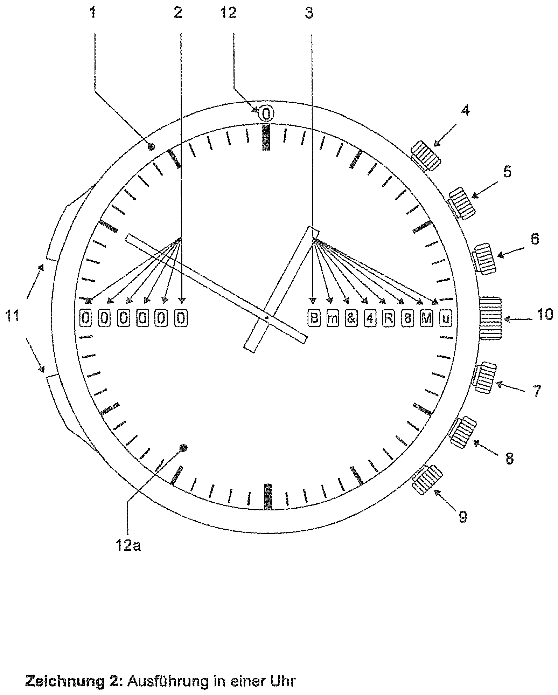

- Zeichnung 2:: **Ausführung in einer Uhr** Zeigt die Erfindung eingebaut in einer klassischen Uhr
- Zeichnung 3:: **Die sechs Baugruppen** Zeigt die sechs Baugruppen, die zusammen die Erfindung bilden
- Zeichnung 4:: **Trommelwerk von oben** Zeigt das Trommelwerk von oben insbesondere Zeichen-Trommeln und Zeichen-Podeste
- Zeichnung 5:: **Zeichen-Trommeln von hinten und von vorne** Detailansichten der Zeichen-Trommeln und ihren Komponenten
- Zeichnung 6:: **Zeichen-Podest** Detailansicht eines Zeichen-Podests
- Zeichnung 7:: **Stelltrieb / Haupttrieb** Detailansicht eines Stelltriebs, respektive des Haupttriebs und ihren Bestandteilen
- Zeichnung 8:: **Stellwerk von oben** Schematische Übersicht auf die Oberseite des Stellwerks
- Zeichnung 9:: **Stellwerk von unten** Schematische Übersicht auf die Unterseite des Stellwerks
- Zeichnung 10:: **Trommel-Bahnen Querschnitt** Zeigt den Querschnitt durch drei Trommel-Bahnen auf der Stelltriebseite
- Zeichnung 11:: **Einrast-Element und Karussell-Mechanik, Detailansicht** Detailansicht der Karussell-Mechanik und der Einrast-Elemente des Stellwerks
- Zeichnung 12:: **Karussell-Mechanik und Haupt-Antrieb, Detailansicht** Zeigt den Haupt-Antrieb der Karussell-Mechanik
- Zeichnung 13:: **Verwischer-Mechanik** Zeigt die Bauelemente der Verwischer-Mechanik am Stellrad und dem Gehäuserahmen

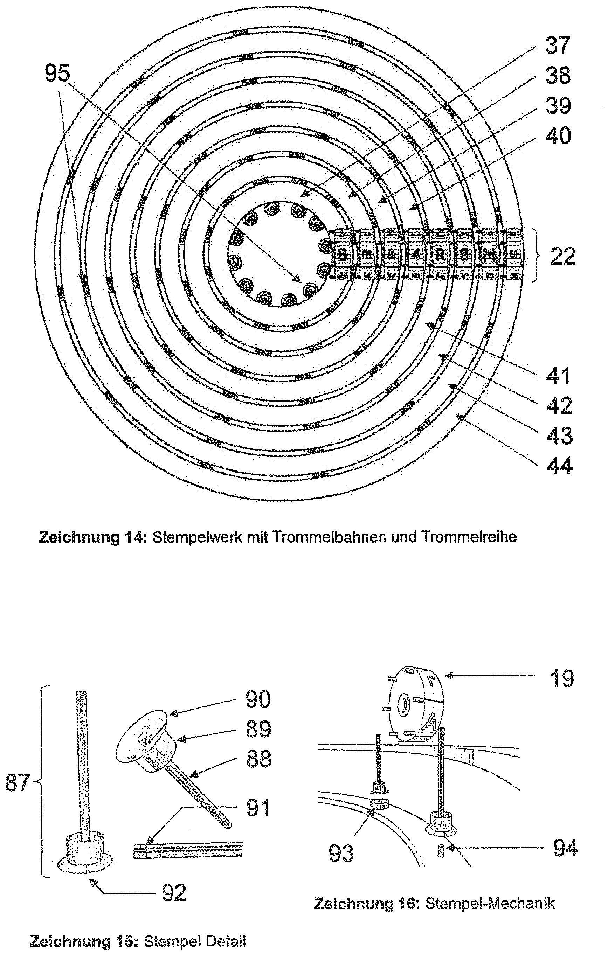

- Zeichnung 14:: **Stempelwerk mit Trommelbahnen und Trommelreihe** Übersicht auf die Oberseite der Trommelbahnen mit Verteilung der Stempel-Positionen
- Zeichnung 15:: **Stempel Detail** Detailansicht eines Stempels und seinen Komponenten von verschiedenen Seiten
- Zeichnung 16:: **Stempel-Mechanik** Zusammenspiel der Stempelschablonen, der Stempel und der Zeichen-Trommeln
- Zeichnung 17:: **Kodierwerk von oben** Übersicht auf die Schablonen-Ringe auf der Oberseite des Stempelwerks
- Zeichnung 18:: **Kodierwerk Querschnitt linke Hälfte** Schematischer Querschnitt durch die linke Hälfte des Kodierwerks
- Zeichnung 19:: **Synchronisations-Rohr** Detailansicht des Synchronisations-Rohrs mit Synchronisations-Bolzen
- Zeichnung 20:: **Zentral-Rohr mit Führungs-Keilen** Detailansicht des Zentral-Rohrs und seinen Führungs-Keilen
- Zeichnung 21:: **Kodierwerk von der Seite** Seitenansicht des Kodierwerks mit Hebe-Vorrichtung
- Zeichnung 22:: **Kodierwerk von unten** Übersicht auf die Unterseite des Kodierwerks
- Zeichnung 23:: **Kodierwerk von unten Detail** Detailansicht der Komponenten auf der Unterseite des Kodierwerks
- Zeichnung 24:: **Pendelwerk** Übersicht auf die Unterseite des Pendelwerks

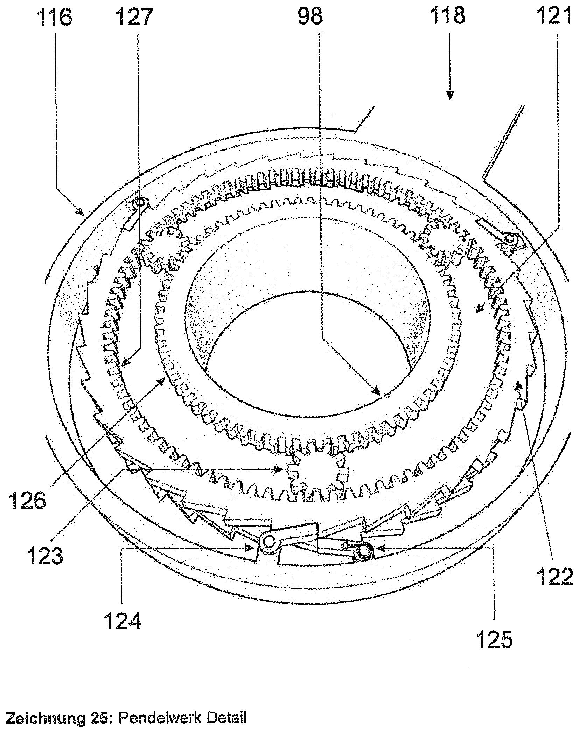

- Zeichnung 25:: **Pendelwerk Detail** Detailansicht auf die Unterseite des Pendelwerks

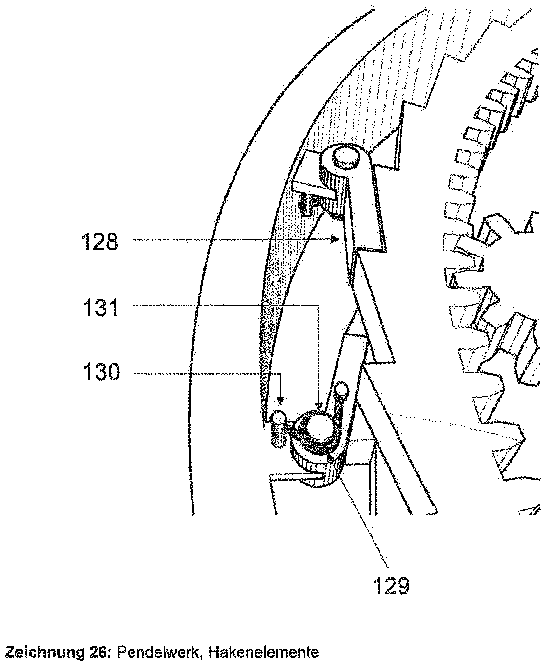

- Zeichnung 26:: **Pendelwerk, Hakenelemente** Detailansicht der Hakenelemente auf der Unterseite des Pendelwerks

### 1.6. Ausführung der Erfindung

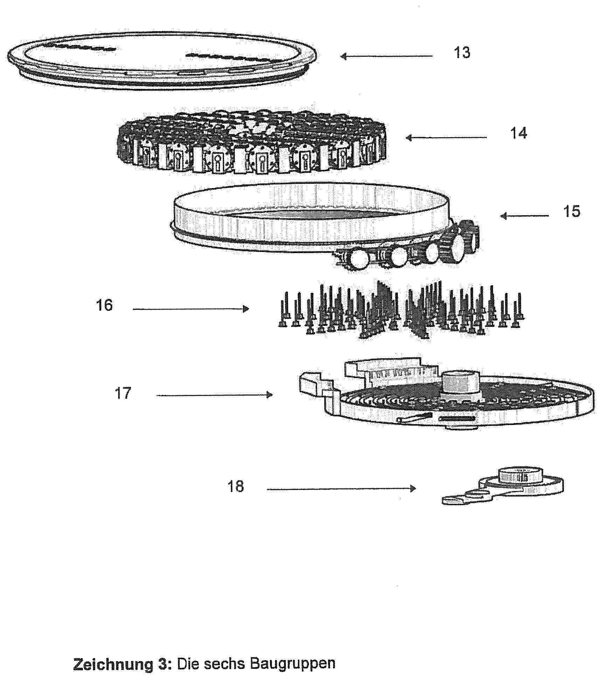

Die unter Punkt 1.3. Stand der Technik aufgezeigten Probleme beim Speichern und Verwalten von Passworten, die Anforderungen an die Zusammensetzung der Passworte und die Forderung, die Passworte regelmäßig zu ändern und dabei jeweils wieder neue komplexe Passworte zu generieren, löst die Erfindung durch das Zusammenspiel der in "Zeichnung 3: Die sechs Baugruppen" als Übersicht dargestellten Werke: Verwischer-Mechanik(13), Trommelwerk(14), Stellwerk(15), Stempelwerk(16), Kodierwerk(17) und Pendelwerk(18).

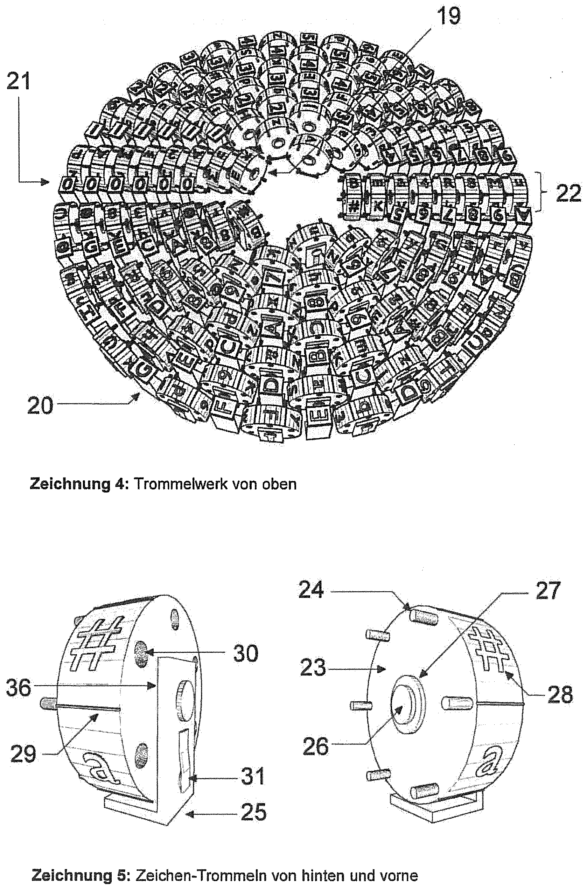

Der Kern der Erfindung ist das Trommelwerk(14). Es besteht in dieser Ausführung der Erfindung aus 96 einzelnen, kleinen, zylinderförmigen Zeichen-Trommeln (Zeichnung 5). Die Zeichen-Trommeln tragen die Zeichen oder Zahlen auf sich, die bei der Verwendung der Erfindung die einzelnen Zeichenstellen des Passwortes mit Zeichen oder Zahlen besetzen und damit das Passwort darstellen. Die Zeichen-Trommeln (Zeichnung 5) sind mit ihrer Halterung auf insgesamt acht, konzentrisch jeweils kleiner werdenden Kreisbahnen oder Ringen angeordnet. Es gibt von außen nach innen die Ringe 19, 17, 15, 13, 11, 9, 7 und 5. Auf dem äußersten Ring mit der Bezeichnung Ring 19 sind in ihrer Anzahl 19 Zeichen-Trommeln in regelmäßigen Abständen platziert. Auf dem Ring 17 sind es 17, auf dem Ring 15 sind es 15, auf dem Ring 13 sind es 13, auf dem Ring 11 sind es 11, auf dem Ring 9 sind es 9, auf dem Ring 7 sind es 7 und auf dem Ring 5 sind es 5 Zeichen-Trommeln, die jeweils auf allen Ringen in regelmäßigen Abständen angeordnet sind. Zur begrifflichen Abgrenzung bezeichnet der Ausdruck "Zeichen-Zylinder" den geometrischen Körper, der zusammen mit den eingravierten oder aufgemalten Zeichen und den übrigen mit dem geometrischen Zylinder unmittelbar assoziierten Teilen, ausgenommen der Drehachse und den Komponenten der L-förmigen Halterung, die Zeichen-Trommel bildet. Jede dieser Zeichen-Trommeln ist auf einer eigenen, L-förmigen Halterung(25) montiert und durch eine Drehachse(26), die durch das durchbohrte Zentrum des Zeichen-Zylinders(23) führt, frei drehbar. Damit der Zeichen-Zylinder(23) sich nicht von der Drehachse löst, ist zur Absicherung eine Abschluss-Scheibe(27) in eine in die Drehachse(26) eingefräste Nut eingelassen. Durch den horizontalen Verlauf der Drehachse(26) und die rechtwinklige Verbindung mit der vertikalen Montageplatte der L-förmigen Halterung(25) verläuft die Drehachse des Zeichen-Zylinders folgerichtig ebenfalls horizontal. Der Radius des Zeichen-Zylinders plus die Distanzbeträge der Trennbalken(29), wenn diese nicht eingraviert sind, sondern die Mantelfläche radial nach distal aufbauen, ist in ihrer Summe minimal geringer, als der Abstand von der Drehachse des Zeichen-Zylinders bis zur Oberfläche der Fußplatte der L-förmigen Halterung(25). Damit ist der Zeichen-Zylinder frei drehbar und stößt mit keinem seiner angebauten Teilen mit der L-förmigen Halterung(25) zusammen. Die folgenden Angaben zur Ausgestaltung der Zeichen-Trommel, sprich dem Zeichen-Zylinder(23) und seinen assoziierten Bauteilen, betreffen jede der 96 Zeichen-Trommeln in gleicher Weise, mit Ausnahme des Auswahlverfahrens der Zeichen oder Zahlen, das weiter unten beschrieben wird. Die Mantelfläche jedes einzelnen Zeichen-Zylinders(23) ist in sechs gleichgroße Flächen unterteilt. Zur Abgrenzung dieser Abschnitte sind senkrecht zum Radius des Zeichen-Zylinders, zur Drehachse des Zeichen-Zylinders parallel verlaufende Trennbalken(29) in den Zeichen-Zylinder eingraviert oder Trennbalken(29) als eigene geometrische ZylinderKörper aufgeklebt und verlaufen über die gesamte Breite der Mantelfläche, resp. über die gesamte Höhe des Zeichen-Zylinders(23). In der Projektion des Zeichen-Zylinders(23) und der Punktprojektion der Zylinderachse als Winkel-Mittelpunkt, verläuft auf der Kreisprojektion der Mantelfläche alle 60 Grad ein Trennbalken. Diese sind in dieser Betrachtung ebenfalls als Punktprojektionen zu verstehen sind. Auf jeder der sechs Mantelflächen-Abschnitte ist ein Zeichen(28) oder eine Zahl aufgemalt, eingraviert oder als eigener geometrischer Körper, der die Höhe der Trennbalken(29) nicht überragt, aufgebracht. Ein Zeichen oder eine Zahl ist ein Element der Gesamtheit aller Klein- und Großbuchstaben des Alphabets, der ganzen Zahlen von und mit null bis und mit neun und der sinnvollen Auswahl an Sonderzeichen, je nach Sprachregion oder gültigem Zeichensatz. Die Zahlen oder Zeichen sind in ihren Mantelflächen-Abschnitten jeweils zentriert positioniert. Vor dem Auftragen auf die Mantelfläche der Zeichen-Zylinder(23) werden die Zeichen oder Zahlen im kombinatorischen Sinne einer Ziehung ohne Zurücklegen zufällig ausgewählt. Ist die Gesamtheit der verfügbaren Zeichen und Zahlen, wie sie beschrieben wurde, erschöpft und deren Zeichen und Zahlen auf die Mantelflächen-Abschnitte verteilt, so wird die Gesamtheit der Zeichen und Zahlen mit identischen Rahmenbedingungen wieder erneuert und es wird wiederum durch kombinatorisches Ziehen ohne Zurückzulegen weiter verfahren. Dieser Vorgang wiederholt sich, bis alle Mantelflächen-Abschnitte aller 96 Zeichen-Trommeln mit Zeichen oder Zahlen belegt sind.

Damit die Mechanik der Erfindung eine Drehung der Zeichen-Trommeln vermitteln kann, sind auf der vorderen Seite, resp. der unteren Kreisfläche der Zeichen-Zylinder(23) insgesamt sechs senkrecht zur Kreisfläche und parallel zur Drehachse(26) und den Trennbalken(29) verlaufende Mitnehmer-Bolzen(24) angebracht. Gleich der Winkel-Anordnung der Trennbalken, sind die sechs Mitnehmer-Bolzen(24) gleichmäßig verteilt und erscheinen ausgehend vom Achsenmittelpunkt der Zeichen-Zylinder jeweils unter einem Winkel von 60 Grad. Auf der gegenüberliegenden Seite des Zeichen-Zylinder(23) sind sechs Einrast-Mulden(30) in den Zylinderkörper eingelassen. Sie haben die Geometrie einer Halbkugel und sind wie die Mitnehmer-Bolzen mit einem Winkelabstand von 60 Grad verteilt, haben aber gegenüber den Mitnehmer-Bolzen eine Winkelverschiebung von 30 Grad. Daraus folgt, dass die Symmetrieachse einer Einrast-Mulde(30), verlaufend durch den Zenit ihrer hemisphärischen Geometrie, bei ihrer radialen Projektion auf die Mantelfläche der Zeichen-Trommel, jeweils einen Mantelflächen-Abschnitt mittig durchläuft, kurzum in ihrer Projektion durch ein Zeichen oder eine Zahl verläuft. Mit diesen Einrast-Mulden(30) steht der Einrast-Apparat(31), bestehend aus einer Blattfeder und einer Kugel in mechanischer Verbindung. In die senkrechte Platte der L-förmigen Halterung(25) ist auf derselben Höhe, eine Lochbohrung mit minimal größerem Radius, als dem Radius der Halbkugeln der Einrast-Mulden(30) gesetzt. Die Mittelachse der Lochbohrung ist jeweils mit der Symmetrieachse derjenigen Einrast-Mulde(30) identisch, welche gerade in der 180 Grad Position (18 Uhr) der Zeichen-Trommel liegt. In die Lochbohrung ist eine Kugel eingelassen, die einen minimal kleineren Radius besitzt, als die Hemisphären der Einrast-Mulden. Eine etwas oberhalb der Lochbohrung, an der senkrechten Platte der L-förmigen Halterung (25) festgemachte Blattfeder verläuft die Lochbohrung verdeckend nach unten und drückt auf die in die Lochbohrung eingelassene Einrast-Kugel. Sobald die Kugel in Folge der Rotation des Zeichen-Zylinders auf eine Einrast-Mulde(30) trifft, wird sie durch die Blattfeder horizontal, parallel zur Drehachse in die Hemisphäre der Einrast-Mulde(30) gedrückt. Die Blattfeder ist in ihrer Federstärke und Hebellänge so konstituiert, dass die Mechanik der Erfindung bei beabsichtigter Rotation der Zeichen-Zylinder diese Federkraft überwinden kann und dadurch die Einrast-Kugel wieder in die Lochbohrung in der senkrechten Platte der L-förmigen Halterung(25) zurückdrängen kann. Die Einrast-Mulden(30) gewährleisten zusammen mit der Blattfeder und der Einrast-Kugel, dass jede Zeichen-Trommel nach mechanisch vermittelter Drehung immer in einer Position zum Stillstand kommt, die der 60 Grad Rasterung entspricht und im Zenit der Zeichen-Trommel ein Zeichen oder eine Zahl zu liegen kommt.

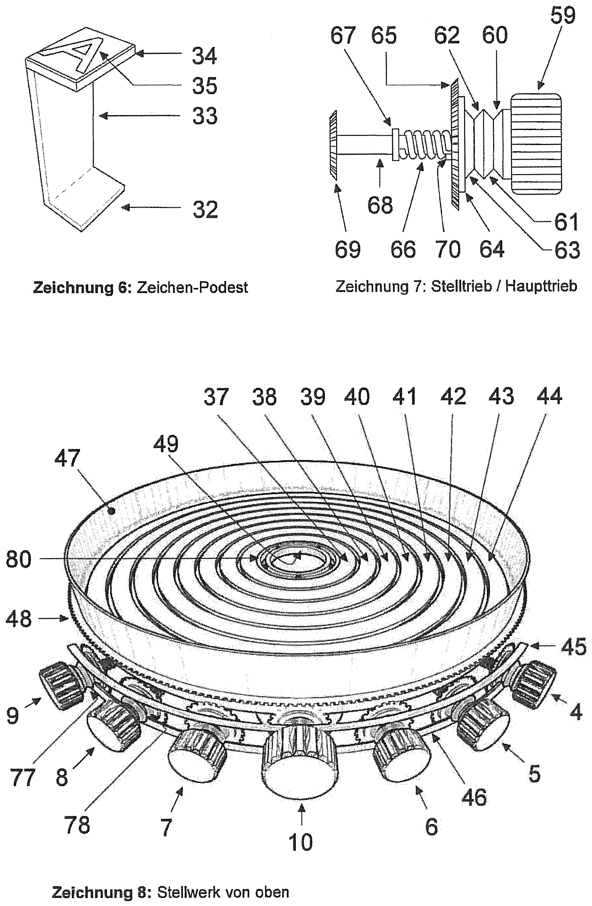

Neben den Zeichen-Trommeln sind im Trommel-Werk 84 Zeichen-Podeste(20) auf sechs der insgesamt neun Kreisbahnen, die auch die Zeichen-Trommeln tragen, platziert. Ein Zeichen-Podest(20) liegt jeweils um 180 Grad rotiert einer Zeichen-Trommel gegenüber. Ein Zeichen-Podest(Zeichnung 6) besteht aus einem Podest-Fuß(32), der senkrecht mit dem Podest-Fuß(32) verbundenen Podest-Stütze(33) und der auf dieser Stütze wiederum horizontal, in ihrer Ebene zur Ebene des Podest-Fußes(32) komplanar verlaufenden Zeichen-Platte(34). Die Zeichen-Platte(34) trägt jeweils ein Zeichen(35) oder eine Zahl(35), die aufgemalt, aufgedruckt, eingraviert oder als eigener geometrischer Körper erstellt ist. Die Zeichen oder Zahlen auf den Zeichen-Podesten(20) sind im Unterschied zu den Zeichen oder Zahlen auf den Zeichen-Trommeln nicht zufällig und ungeordnet ausgewählt, sondern sie sind eindeutig vorgegeben. Auf dem äußersten Ring gibt es 19, auf dem folgenden, kleineren Ring noch 17, dann 15, 13, 11 und schließlich auf dem sechsten Ring noch 9 Zeichen-Podeste(20). Auf den beiden innersten Ringen gibt es keine Zeichen-Podeste(20). Die Systematik der Zeichen- oder Zahlen-Belegung der Zeichen Podeste(20) ist für alle sechs Ringe identisch. Auf jedem der sechs Ringe wird das erste Zeichen-Podest(20) einer zufällig ausgewählten Zeichen-Trommel, in einem 180 Grad Winkel, unmittelbar gegenüber liegend, auf demselben Ring befestigt und die Zeichen-Platte(34) mit der Zahl null belegt. Entsprechend der Vorgabe der gleichmäßigen Verteilung der Zeichen-Trommeln und der Zeichen-Podeste(20) pro Ring, folgt die Platzierung des folgenden Zeichen-Podestes auf demselben Ring im Uhrzeiger-Sinn mit dem entsprechenden Winkelabstand zum Zeichen-Podest mit der Zahl null. Dieses zweite Zeichen-Podest wird mit der Zahl eins belegt In diesem Sinne werden pro Ring die weiteren Zeichen-Podeste befestigt und jeweils in aufsteigender Weise mit den ganzen Zahlen von und mit null bis und mit neun belegt. Somit sind pro Ring die ersten zehn Zeichen-Podeste definiert. Ab dem elften Zeichen-Podest werden in aufsteigender Weise die Großbuchstaben des Alphabets verwendet. Dies passiert pro Ring solange, bis er komplett mit Zeichen-Podesten belegt ist. Folglich besitzt der innerste Ring insgesamt 9 Zeichen-Podeste mit den Zahlen von und mit null, bis und mit acht. Bei Ring 11 kommt die Zahl neun und der Buchstabe A hinzu. Ring 13 hat zusätzlich die Buchstaben B und C, bei Ring 15 kommen die Buchstaben D und E, bei Ring 17 die Buchstaben F und G hinzu. Ein Sonderfall bildet Ring 19, bei dem der Buchstabe H hinzukommt, die Systematik aber im letzten Zeichen abweicht. An die Stelle des zu erwarteten Buchstaben I tritt hier das Zeichen @, um eine Verwechslung des Buchstaben I mit einem Kleinbuchstaben des Großbuchstaben L oder einer Zahl eins zu vermeiden.

Für die Erfüllung der Ansprüche der Erfindung ist die Anordnung der Zeichen-Trommeln auf verschiedenen Kreisbahnen und die regelmäßige, am selben Startpunkt beginnende Ausrichtung auf den einzelnen Kreisbahnen zwingend. Bei der Betrachtung des Trommelwerks(Zeichnung 4) in seinem Grundzustand, werden die geometrischen Vorgaben der Platzierung der Zeichen-Trommeln und der Zeichen-Podeste(20) sichtbar. Die Zeichen-Trommeln(19) und die Zeichen-Podeste(20) stehen mit den unteren Flächen ihrer Fuß-Platten(25,32) auf derselben Ebene. Für jede Zeichen-Trommel(19) gilt, dass ihre Zylinder-Achse die Normale, also die senkrechte Gerade, die durch den gemeinsamen Mittelpunkt der neunzehn Kreisbahnen, resp. Ringen führt, schneidet. Die Zeichen-Podeste(20) sind analog den Zeichen-Trommeln(19) ebenfalls konzentrisch auf den Kreisbahnen, resp. Ringen angeordnet. Dabei zeigen die Podest-Stützen(33) und die Trommel-Stützen(36) jeweils nach distal, vom gemeinsamen Mittelpunkt der Kreisbahnen weg. Die Belegung der Kreisbahnen mit Zeichen-Trommeln(19) beginnt, ausgehend vom Grundzustand des Trommel-Werks(Zeichnung 4) mit Sicht von oben, bei 90 Grad oder der 15Uhr Position in Analogie zu einem Uhren-Ziffernblatt. Auf jedem Ring wird die erste Zeichen-Trommel(19) auf dieser 90 Grad-, resp. 15 Uhr-Position befestigt. Im Uhrzeigersinn fortfahrend folgt pro Ring eine Zeichen-Trommel(19) nach der anderen. Damit die Vorgabe der regelmäßigen Verteilung eingehalten wird, ist der Gesamtwinkel des Kreises von 360 Grad durch die Anzahl Zeichen-Trommeln(19) zu dividieren. Es resultiert der Winkel, unter dem pro Ring die jeweils nächste Zeichen-Trommel(19) zu platzieren ist. Damit entsteht auf der 90 Grad-Position von oben betrachtet eine Zeichen-Walze(22) bestehend aus den Zeichen-Trommeln(19) der acht Kreisbahnen, resp. Ringen. Dadurch ist die Darstellung eines Passwortes auf einer horizontalen Geraden, bestehend aus acht Zeichen oder Zahlen, möglich. Es sind jeweils die im Zenit der Zeichen-Trommeln stehenden Zeichen oder Zahlen, die in ihrer Gesamtheit in der Zeichen-Walze(22) das Passwort von links (proximal) nach rechts (distal) gelesen, darstellen.

In einer Zeichen-Reihe(21) auf einer Winkelposition genau um 180 Grad der Zeichen-Walze(22) gegenüberliegend, wird der Haupt-Zugangscode durch die Zeichen oder Zahlen auf insgesamt sechs Zeichen-Podesten(20), ebenfalls von links (hier distal) nach rechts (hier proximal) gelesen, angezeigt. Um die Anordnung des Haupt-Zugangscodes und des Passwortes auf einer horizontalen Linie, die durch den Mittelpunkt der Kreisbahnen führt, zu erreichen, muss die Winkelposition, welche der Zeichen-Walze(22) um 180 Grad rotiert gegenüber liegt, frei von Zeichen-Trommeln sein und Platz für die Zeichen-Podeste(20) lassen. Aus diesem Grund muss die Anzahl der Zeichen-Trommeln für jeden Ring, resp. Kreisbahn, auf der die Zeichen-Trommeln in regelmäßigen Abständen angeordnet werden, zwingend eine ungerade Zahl sein. Daher betragen die Anzahlen der Zeichen-Trommeln pro Ring von außen nach innen: 19, 17, 15, 13, 11, 9, 7 und 5. In dieser Ausführung der Erfindung sind es die äußeren sechs Kreisbahnen, resp. Ringe, welche mit Zeichen-Podesten(20) belegt sind, es resultiert in der Anwendung ein Haupt-Zugangscode, der aus sechs Zeichen-Stellen besteht. Weil die Zeichen-Trommeln (für das Passwort) und die Zeichen-Podeste(20) (für den Haupt-Zugangscode) jeweils gemeinsam auf den einzelnen Kreisbahnen, resp. Ringen platziert sind, durchlaufen sowohl die Zeichen-Trommeln die Position der Zeichen-Reihe(21), als auch die Zeichen-Podeste(20) die Position der Zeichen-Walze. Zur eindeutigen Unterscheidung, ob ein Zeichen vom Haupt-Zugangscode Typus ist, oder ob ein Zeichen vom Passwort-Typus ist, haben die Mantelflächen der Zeichen-Zylinder(23) eine andere Farbe, als die Zeichen-Platten(34) der Zeichen-Podeste(20). Somit ist sichergestellt, dass die Hintergrundfarbe der Zeichen-Reihe(21) sich von der Hintergrundfarbe der Zeichen-Walze(22) klar unterscheidet und sich folglich auch der Haupt-Zugangscode (links) vom Passwort (rechts) eindeutig farblich und geometrisch trennt. Das Deckblatt(12a) hat für die Zeichen-Reihe(21) des Haupt-Zugangscodes und die Zeichen-Walze(22), die das Passwort wiedergibt, an den entsprechenden Stellen pro Zeichenstelle eine rechteckige Aussparung, die die Durchsicht auf die Zeichen des Haupt-Zugangscodes und des Passwortes ermöglichen. Das Deckblatt(12a) liegt über allen Elementen des Trommel-Werks(14) und verdeckt diese mit Ausnahme der Elemente der Zeichen-Reihe(21) und jener der Zeichen-Walze(22) gänzlich. Aus Gründen einer besseren Übersicht ist das Deckblatt 12a dem Verwischer-Werk 13 zugeordnet.

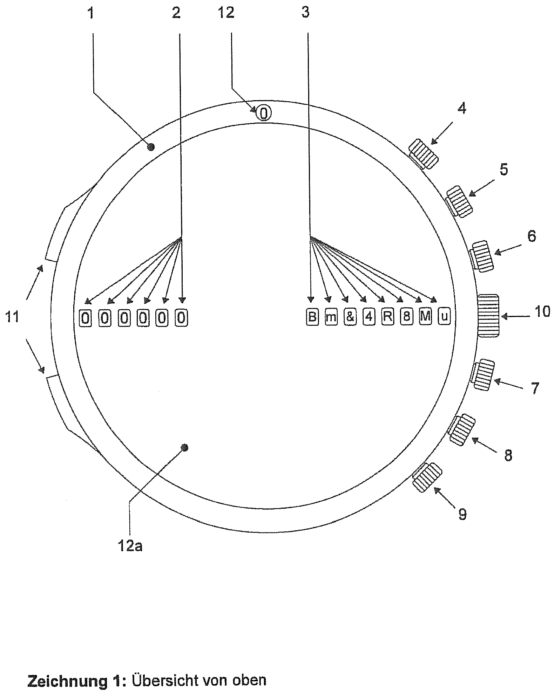

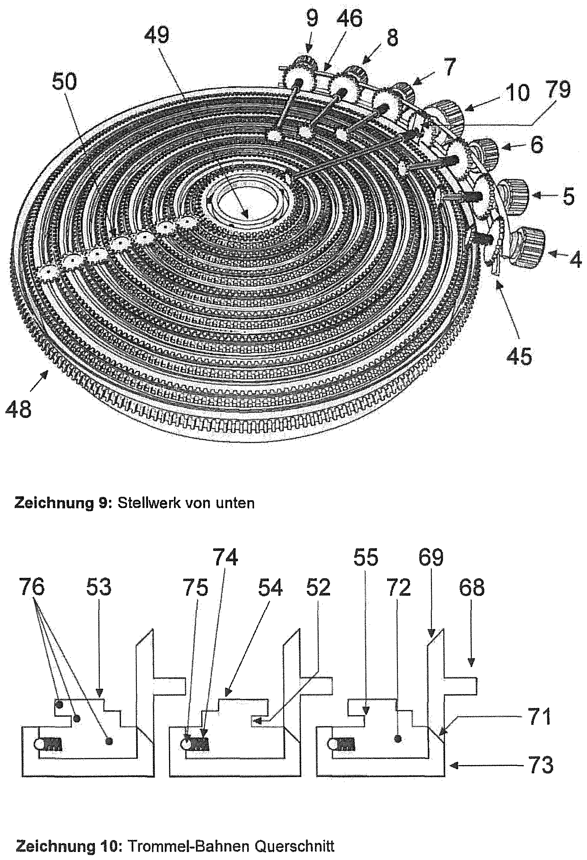

Für die Erfüllung der Anforderungen an die Erfindung ist als zentrale Baugruppe das Stellwerk 15 verantwortlich. Auf seiner Oberseite (Zeichnung 8) sind die Zeichen-Trommeln 19 und die Zeichen-Podeste 20 mit ihren Fuss-Platten 25,32 auf den acht Trommel-Bahnen 37,38,39,40,41,42,43,44 gemäss den formulierten Anordnungsvorgaben festgemacht. Dabei wird eine Verschweissung, eine Verklebung, eine Verschraubung oder ein dem Material angemessenes Verbindungsverfahren angewandt. Die Unterseite (Zeichnung 9) des Stellwerks ist für die mechanischen Vorgänge zur manuellen Einstellung des Haupt-Zugangscodes und die Vermittlung der mechanischen Kopplung des Stellrades 1 mit der Stellwerk-Mechanik und die damit verbundene Bewegung aller Komponenten, die zur fortlaufenden Erzeugung der Passworte aktiv sind, verantwortlich. Die Ausführung der Erfindung beschränkt sich zur Darstellung des Haupt-Zugangscodes in der Code-Anzeige 2 auf sechs Zeichenstellen. Durch die Multiplikation der Anzahlen der einstellbaren, verschiedenen Zeichen pro verwendeter Trommel-Bahn 39, 40, 41, 42, 43, 44, sie entspricht der Anzahl der Zeichen-Podeste 20 pro Trommel-Bahn, miteinander, resultiert die maximale Menge der einstellbaren Haupt-Zugangscodes der Erfindung. Diese Rechnung ergibt von der äussersten Trommel-Bahn 44 ausgehend und nach innen fortgesetzt die Multiplikation: 19 × 17 × 15 × 13 × 11 × 9 = 6'235'515. Zur manuellen Einstellung eines gewünschten, im Rahmen der berechneten Code-Fülle beliebigen Hauptzugangscodes, sind sechs Stelltriebe (Zeichnung 7) durch die äussere Gehäusewand geführt. Jedem der sechs Stelltriebe 4,5,6,7,8,9 ist eine der Trommel-Bahnen 44, 43, 42, 41, 40, 39 zugeordnet. Bei Betrachtung der Erfindung von oben (Zeichnung 1) ist der am weitesten oben gelegene Stelltrieb_Nr.1 4 mit der äussersten Trommel-Bahn_Nr.1 44 assoziiert und dient zusammen mit dem Stellrad 1 der Einstellung der ersten Ziffer des Haupt-Zugangscodes in der Code-Anzeige 2. Der auf diesen Stelltrieb 4 folgende Stelltrieb_Nr.2 5 ist mit der Trommel-Bahn_Nr.2 43 und der letzte der drei oben gelegenen Stelltriebe, Stelltrieb_Nr.3 6 ist mit der Trommel-Bahn_Nr.3 42 assoziiert. Es folgt unterhalb der horizontalen X-Achse der Stelltrieb_Nr.4 7, der Stelltrieb_Nr.5 8 und der unterste Stelltrieb_Nr.6 9, die entsprechend der fortlaufenden Zeichenstellen des Code-Anzeige 2, den Trommel-Bahnen mit den Bezeichnungen Trommel-Bahn_Nr.4 41, Trommel-Bahn_Nr.5 40 und Trommel-Bahn_Nr.6 39 in Zusammenhang stehen. Der formulierte Zusammenhang einer Trommel-Bahn 44, 43, 42, 41, 40, 39 mit einem Stelltrieb 4,5,6,7,8,9 besteht in der Notwendigkeit der Manipulation an einem Stelltrieb, um eine bestimmte Trommel-Bahn 44, 43, 42, 41, 40, 39 mit dem Stellrad 1 mechanisch zu koppeln. Damit die mechanische Koppelung zur Vermittlung der Drehbewegung am Stellrad 1 auf eine der Trommel-Bahnen 44, 43, 42, 41, 40, 39 stattfindet, muss entsprechend einer der Stelltriebe von aussen gegen die Gehäusewand gedrückt werden. Dadurch entsteht eine durchgehende Verbindung rotierender Getriebekomponenten, welche die Drehung am Stellrad 1 auf die entsprechende gekoppelte Trommel-Bahn 44, 43, 42, 41, 40, 39 überträgt. Das Stellrad 1, mechanisch fest mit dem Stellrad-Becher 47 verbunden, erfährt seine Rotation durch eine willkürliche, manuelle Drehung und gibt diese durch das gezahnte Haupt-Kegelrad 48, das peripher den Stellrad-Becher 47 umgibt und fest mit diesem verbunden ist, an das Vermittler-Rad 65 des entsprechenden Stelltriebes 4,5,6,7,8,9 weiter. Das Vermittler-Rad 65, selber durch eine Nut-Aussparung an seiner zentralen Loch-Bohrung auf der Vermittler-Achse 68 axial verschiebbar, übergibt die Drehbewegung über die Nut-Aussparung an das in die Vermittler-Achse 68 eingelassene Mitnehmer-Profil 70 an die Vermittler-Achse 68 weiter. Die Vermittler-Achse 68 ihrerseits trägt an ihrem dem Stelltrieb 4,5,6,7,8,9 abgewandten Ende, ein fest verbundenes gezahntes Kegelrad, das Bahn-Triebrad 69. Dieses Bahn-Triebrad 69 überträgt schliesslich die Rotation an die Trommel-Bahn 44, 43, 42, 41, 40, 39, indem seine Verzahnung in jene des Bahn-Kegelrades 71 der entsprechenden Trommel-Bahn 44, 43, 42, 41, 40, 39 greift. Die Übersetzungsverhältnisse und die Grösse der Verzahnung sowohl zwischen dem Haupt-Kegelrad 48 und dem Vermittler-Rad 65, als auch dem Bahn-Triebrad 69 und dem Bahn-Kegelrad 71 werden so gewählt, dass die Rotationsgeschwindigkeit der ausgewählten Trommel-Bahn 44, 43, 42, 41, 40, 39 möglichst nahe bei der Umdrehungsgeschwindigkeit des Stellrades liegt, um ein Übersetzungsverhältnis von annähernd 1:1 zu erhalten. Die manuelle Drehung am Stellrad 1 wird über diesen mechanischen Getriebe-Typus, der für jede der sechs Zeichenstellen des Haupt-Zugangscodes und somit für jede der sechs Trommel-Bahnen 44, 43, 42, 41, 40, 39 individuell vorhanden ist, auf die jeweils ausgewählte Trommel-Bahn 44, 43, 42, 41, 40, 39 übertragen. Dabei gleitet der Trommelbahn-Körper 73, der im Querschnitt die Form eines U-Profils hat, auf dem Trägerring-Körper 72, der im Querschnitt ein Rechteck bildet und somit ein zum Kreis gebogenes, rechteckiges Vollprofil darstellt. In einem Ausschnitt (Zeichnung 10) der Trommel-Bahnen, der die Trommel-Bahn_Nr.2 43), Trommel-Bahn_Nr.3 42 und die Trommel-Bahn_Nr.4 41 zeigt, wird dies deutlich. Der Trägerring-Körper 72 bildet zusammen mit den Zahnrädern 52,53,54 und 55 den Trägerring 76. Damit die manuelle Bedienung der Erfindung über das Stellrad 1 eine gewisse Kontrolle erfährt und um die Handhabung zu vereinfachen, ist zwischen dem Trommelbahn-Körper 73 und dem Trägerring-Körper 72 ein Einrast-Apparat, bestehend aus der einer Spiralfeder 74 und einer Kugel 75, eingelassen. Dazu ist eine Lochbohrung in den Trägerring-Körper 72 getrieben, welche in ihrem Durchmesser minimal grösser ist, als der Durchmesser der Kugel 75. Im Trommelbahn-Körper 73 ist eine hemisphärische Mulde so eingelassen, dass die Kugel 75 durch den Druck der Spiralfeder 74 bei geometrisch komplementärer Lage in die im Radius minimal grössere hemisphärische

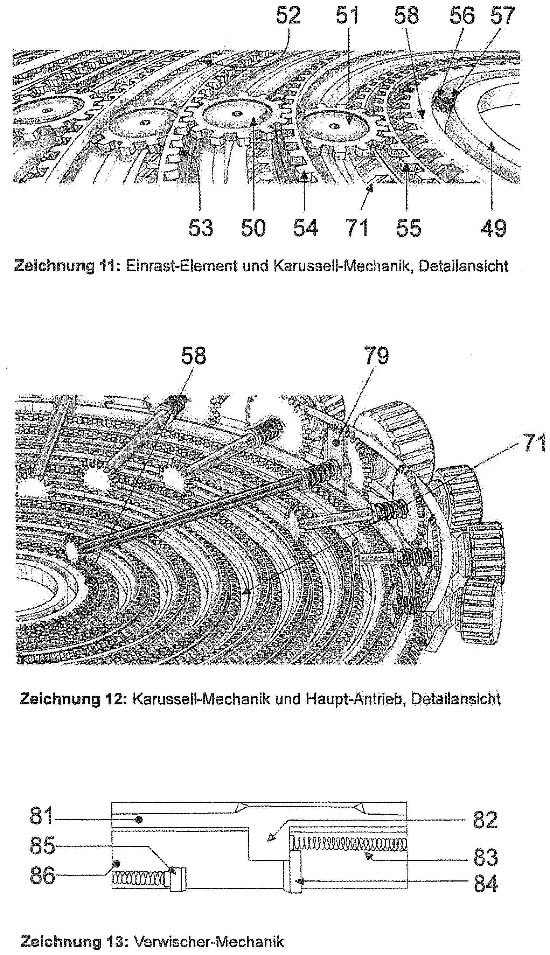

Mulde geschoben wird. Für jede Trommel-Bahn(44, 43, 42, 41, 40, 39) sind so viele dieser Einrast-Mechanismen vorhanden, wie es Zeichen-Podeste(20) auf der entsprechenden Trommel-Bahn(44, 43, 42, 41, 40, 39) gibt. Die Positionierung, resp. die Anordnung der Einrast-Mechanismen im Kreis, bei Betrachtung von oben, entspricht im Winkel genau jener der Zeichen-Podeste. Es gibt darum, wie bei den Zeichen-Podesten auch, eine unterschiedliche Anzahl dieser Einrast-Mechanismen pro Trommel-Bahn(44, 43, 42, 41, 40, 39). Mit der Hilfe dieser Einrast-Mechanismen ist sichergestellt, dass bei entsprechend gefühlvoller Drehung am Stellrad(1) und folgendem Stoppen des Stellrads(1), wenn das Vorspringen der Kugel(75) bemerkt wird, die betreffende Trommel-Bahn(44, 43, 42, 41, 40, 39) in einer Position inne hält, bei der in der entsprechenden Zeichenstelle der Code-Anzeige(2) ein Zeichen-Podest zum Halten kommt. Pro Trommel-Bahn(44, 43, 42, 41, 40, 39), deren mechanische Grundlage der Trommelbahn-Körper(73) und der Trägerring(76) gemeinsam bilden, würde auch eine Kugel(75) und eine Spiralfeder(74) ausreichen. Um die Funktion zu gewährleisten, müssen aber sämtliche hemisphärische Mulden in den Trägerring-Körpern(72) der Trägerringe(76) eingefräst sein. Die Federkraft aller Spiralfedern(74) dieses Einrast-Mechanismus, der auf den Trommelbahn-Körper(73) einwirkt, ist in der Summe kleiner, als die Rückhalte-, Reibungs- oder Beharrungskräfte derjenigen Mechanik, welche unmittelbar am Trägerring(76) anschließt. Diese Bedingung ist unverzichtbar, um sicher zu stellen, dass durch die manuelle Einstellung des Haupt-Zugangscodes durch den beschriebenen mechanischen Vorgang, nur die Trommelbahn-Körper(73) der einzelnen Trommel-Bahnen(44, 43, 42, 41, 40, 39) angetrieben werden und sonst keine weiteren mechanischen Komponenten unbeabsichtigt in Bewegung gesetzt werden. Gleichzeitig bewirkt diese Bedingung der in der Summe niedrigeren Widerstandskraft des beschriebenen Einrast-Mechanismus, dass bei der Rotation aller acht Trommel-Bahnen(44, 43, 42, 41, 40, 39, 38 und 37), vermittelt durch die später beschriebene Karussell-Mechanik(Zeichnung 11 und 12), welche die Trägerringe(76) antreibt, die Trommelbahn-Körper(73) dennoch mitgedreht werden, da die Spiralfeder-Kräfte den Trägheitsmomenten der mit Zeichen-Trommeln(19) und Zeichen-Podesten(20) besetzten Trommelbahn-Körper(44, 43, 42, 41, 40, 39) Stand halten.

Zur Anwahl der einzelnen, einzustellenden Zeichenstellen im Haupt-Zugangscode in der Code-Anzeige(2) und die damit zwangsläufige mechanische Koppelung des Vermittler-Rades(65) eines entsprechenden Stelltriebes(4,5,6,7,8,9), muss der Stelltrieb-Kopf(59) manuell von außen (distal), radial nach innen (proximal) gegen das Zentrum des Deckblattes(12a) gedrückt werden. Dem Stelltrieb-Kopf(59) unmittelbar folgend und axial angesetzt sind das äußere_Kufen-Rad(77), das innere_Kufen-Rad(78), die Führungsscheibe(64) und schließlich das Vermittler-Rad(65). Diese fünf Bauteile sind fest miteinander verbunden und es führt eine zentrale, entlang ihrer Symmetrie-Achse verlaufende Bohrung, ausgehend vom Vermittler-Rad(65) durch die Führungsscheibe(64), das innere_Kufen-Rad(78), das äußere_Kufen-Rad(77), bis zur Mitte des Stelltrieb-Kopfes(59), der somit nicht komplett durchbohrt wird. Auf Grund dieser zentralen Bohrung kann die Gesamtheit der Bauelemente vom Stelltrieb-Kopf(59) bis und mit dem Vermittler-Rad(65) auf der Vermittler-Achse(68) radial auf beide Seiten entlang gleiten. Damit eine Drehung des Vermittler-Rades(65) auf die Vermittler-Achse(68) übertragen wird, ist inwändig, entlang der zentralen Bohrung durch das Vermittler-Rad(65), die Führungsscheibe(64), das innere_Kufen-Rad(78), und das äußere_Kufen-Rad(77) eine Nut eingefräst, die in ihrer Dimension die äußeren Masse des Mitnehmer-Profils(70) minimal übertrifft, so dass das Mitnehmer-Profil(70) in dieser Nut gleiten kann. Die feste Verbindung des Mitnehmer-Profils(70) mit der Vermittler-Achse(68) stellt sicher, dass eine Rotation des Vermittler-Rades(65) zwingend auf die Vermittler-Achse(68) übertragen wird. Eine auf der Vermittler-Achse(68) liegende Rückstell-Feder(66) wird durch einen Feststellring(67), welcher fest mit der Vermittler-Achse(68) verbunden ist, derart in Position gehalten, dass die entspannte Rückstell-Feder(66) in ihrer maximalen Ausdehnung die Bauteil-Kolonne, bestehend aus dem Vermittler-Rad(65), der Führungsscheibe(64) dem inneren_Kufen-Rad(78), dem äußeren_Kufen-Rad(77) und dem Stelltrieb-Kopf(59), radial nach außen drückt, sodass das Obere_Klemmprofil(45) und das Untere_Klemmprofil(46) (siehe Zeichnung 8), sich maximal dem geringsten Radius des inneren_Kufen-Rades(78) nähern. Dazu weisen die beiden Klemmprofile in ihrem Querschnitt eine Dreiecksform auf, die in ihrer Winkel-Konstitution dem Winkel der Vertiefung in den Kufen-Rädem(77,78) entspricht. In dieser Position berühren die beiden, in die Vertiefung des äußeren_Kufen-Rades(77) verschobenen Seitenflächen der Klemmprofile(77,78) die schrägen Laufflächen der nicht gezahnten, glattwandigen äußeren_Kegelscheibe(60) und der ihr unmittelbar folgenden inneren_Kegelscheibe(61), welche zusammen das äußere_Kufen-Rad(77) bilden. Durch das Manuelle nach Innen Drücken des Stelltrieb-Kopfes(59) und die damit verbundene axiale Verschiebung aller Bauteile ausgehend vom Stelltrieb-Kopfe(59), bis und mit dem Vermittler-Rad(65) auf der Vermittler-Achse(68), wird die Rückstell-Feder(66) gegen sein Widerlager, den Feststellring(67) zusammengedrückt. Bei diesem Vorgang werden die beiden Klemmprofile(45,46) entlang der schrägen Lauffläche der inneren_Kegelscheibe(61) aus der Laufrinne des äußeren_Kufen-Rades(77) gedrängt und passieren den äußersten Grat, den die innere_Kegeischeibe(61) des äußeren_Kufen-Rades(77) zusammen mit der äußeren_Kegelscheibe(62) des inneren_Kufen-Rades(78) bildet, um schließlich entlang der schrägen Lauffläche der äußeren_Kegelscheibe(62) des inneren_Kufen-Rades(78) wieder in die Vertiefung des inneren_Kufen-Rades(78), aufgebaut aus der inneren_Kegelscheibe(63) und der äußeren_Kegelscheibe(62), zu gleiten. Eine Führungsscheibe(64) trennt das Vermittler-Rad(65) vom inneren_Kufen-Rad(78) und sorgt dafür, dass die beiden Klemmprofile(45,46) das Vermittler-Rad(65) nicht berühren. Dazu sind die beiden Klemmprofil(45,46) aus einem Federstahl gefertigt und an ihren Enden fest im Gehäuse verankert. Wahlweise können die Klemmprofile(45,46) an ihren freien Enden auch durch vier Spiralfedern, jeweils eine pro Profilende, gegen die Kufen-Räder(77 oder 78) gedrückt werden. Es können mehrere Stelltriebe(4,5,6,7,8,9) gleichzeitig in gedrückter Position sein. Wenn dies der Fall ist, überträgt sich die manuell ausgeführte Drehung am Stellrad(1) auf alle, den gedrückten Stelltrieben(4,5,6,7,8,9) assoziierte Trommel-Bahnen(44, 43, 42, 41, 40, 39). Die Stelltriebe(4,5,6,7,8,9) sind in ihrem Aufbau bis auf die Länge der Vermittler-Achse(68) identisch. Die Vermittler-Achsen(68) unterscheiden sich in ihrer Länge je nach dem, welcher Trommelbahn-Körper(73) erreicht werden muss. Nachdem ein Haupt-Zugangscode mit Hilfe der Stelltriebe(4,5,6,7,8,9) und der Drehung am Stellrad(1) eingestellt ist, erscheint der Haupt-Zugangscode in vollständiger Konstitution in der Code-Anzeige(2) auf der linken Seite des Deckblattes(12a).

Weil die Zeichen-Podeste(20) und die Zeichen-Trommeln(19) pro Trommel-Bahn(44, 43, 42, 41, 40, 39, 38 und 37) bekannterweise jeweils fest montiert sind, erscheint in der Passwort-Anzeige(3) ebenfalls eine Zeichen-Reihe, die das Startpasswort bildet. Dieses kann für eine Anwendung bereits verwendet oder aber auch ignoriert werden. Um weitere Passworte zu erzeugen, müssen alle Stelltriebe(4,5,6,7,8,9) nach außen gezogen und ihre Rückstell-Federn(66) entspannt in ihrer maximalen Ausdehnung sein. Hiermit ist gesichert, dass es keine mechanische Koppelung des Stellrades(1) mit einem der sechs Vermittler-Räder(65) der Stelltriebe(4,5,6,7,8,9) mehr gibt, das Stellrad(1) dreht in diesem Zustand frei. Die zweite Bedingung, die zur Erzeugung weiterer Passworte erfüllt sein muss, ist die nach innen, gegen den Schwerpunkt der Erfindung gedrückte Position des Haupttriebs(10). Der Haupttrieb(10) ist bis auf ein zusätzlich vorhandenes Bauteil, dem Synchronisations-Blatt(79), gleich aufgebaut, wie die Stelltriebe(4,5,6,7,8,9). Das Synchronisations-Blatt(79) besteht aus einem dünnen Rechteck-Profil, das durch eine Abstandscheibe vom Vermittler-Rad(65) des Haupttriebs(10) abgesetzt ist und eine Lochbohrung aufweist, damit es von der Vermittler-Achse(68) des Haupttriebs durchstoßen werden und die Achse dennoch frei drehen kann. Am Stellrad-Becher(47) befindet sich in Ruheposition des Stellrads(1) auf dessen rechten Seite eine Rechteck-förmige Aussparung, die es dem Synchronisations-Blatt(79) erlaubt, durch die Drückbewegung auf den Haupttrieb(10), auf die innere Seite des Stellrad-Bechers(47) zu gelangen. So wird sicher gestellt, dass der Haupttrieb(10) nur dann gedrückt werden kann, wenn sich das Stellrad(1) in der Ruheposition befindet Ist die oben erwähnte, zweite Bedingung erfüllt, besteht eine mechanische Koppelung des Stellrades(1), fest verbunden mit dem Stellrad-Becher(47), der wiederum das Haupt-Kegelrad(48) auf seiner äußeren Mantelfläche trägt, mit dem Vermittler-Rad(65) des Haupttriebs(10). Dieses Vermittler-Rad(65) überträgt seine Rotation analog zur Übertragungsweise bei den Stelltrieben(4,5,6,7,8,9) durch seine entlang der Lochbohrung eingefrästen Nut auf das Mitnehmer-Profil(70), das bei seiner Drehung die Vermittler-Achse(68) des Haupttriebs(10) ebenfalls in Rotation versetzt, um schließlich das am inneren, dem Haupttrieb-Kopf(59) abgewandten Ende der Vermittler-Achse(68) fest angebrachte Vermittler-Rad(69) zu rotieren. Die Verzahnung des Vermittler-Rads(69) greift in die Verzahnung des Haupt_Trägerrades(58) und rotiert dadurch den innersten Trägerring(76) des Stellwerks(15). Der innerste Trägerring(76) ist zum Unterschied zu den übrigen sieben Trägerringen(76) um den Abschluss-Bechers(80) erweitert. Dieser Abschluss-Becher(80) entspricht in seiner Geometrie einem RohrAbschnitt, der in seiner Ausdehnung, beginnend mit seiner unteren Deckfläche, die eben mit der Deckfläche des Haupt_Trägerrades(58) ist, mit seiner oberen Deckfläche bis zur Oberfläche des Trommelbahn-Körpers(73) reicht. Folglich ist die innere Mantelfläche des Abschluss-Bechers(80) des innersten Trägerrings(76) der äußeren Mantelfläche des unbeweglichen Zentral-Rohrs(49) direkt gegenüberliegend. Damit bei der Drehung des innersten Trägerrings(76) durch den beschriebenen Übertragungsweg die Zeichen-Trommeln(19) nur bei definierten Positionen zum Stehen kommen, ist zwischen diesen beiden Strukturen ein Einrast-Apparat(Zeichnung 11) aufgebaut. Dieser dient dazu, bei der manuellen Drehung am Stellrad(1), jeweils einen kleinen, spürbaren Widerstand entgegenzuhalten, wenn sich die Zeichen-Trommeln(19) und damit auch die Zeichen-Podeste(20) auf ihren Trommel-Bahnen(37, 38, 39, 40, 41, 42, 43, 44) soweit bewegt haben, dass sie, über alle acht Trommel-Bahnen(37, 38, 39, 40, 41, 42, 43, 44) betrachtet, wieder eine Zeichen-Reihe(21), respektive Zeichen-Walze(22) bilden. Um diesen Einrast-Widerstand zu erzeugen, sind an der Innenseite des Abschluss-Bechers(80) entsprechend der Anzahl vorliegender Zeichen-Trommeln(19), es sind für die innerste Trommel-Bahn(37) deren fünf, fünf Vertiefungen in der Form einer Halbkugel eingefräst. Diese hemisphärischen Mulden sind regelmäßig, im gleichen Winkel-Abstand, wie er bei den fünf Zeichen-Trommeln(19) der Trommel-Bahn(37) vorliegt, eingefräst. Für die Funktion dieses Einrast-Apparates ist ausschließlich die regelmäßige, im Winkel-Abstand identische Verteilung der Mulden maßgebend, eine definierte Start- resp. Endposition ist keine Konstruktionsbedingung. Auf der Außenseite des Zentral-Rohrs(49) sind, den Mulden auf der Innenseite des Abschluss-Bechers(80) gegenüberliegend und deren Anzahl entsprechend und in ihrer Funktion korrespondierend, fünf Spiralfedern(57) fest angebracht. Diese Spiralfedern(57) drücken jeweils eine kleine Einrast-Kugel(56) gegen die Innenseite des Abschluss-Bechers(80) am innersten Trommelbahn-Körper(73). Wenn keine der hemisphärischen Vertiefungen der Innenseite des Abschluss-Bechers(80) einer Längsachse der Spiralfedern(57) korrespondierend gegenüberliegt, rollt die Einrast-Kugel(56) auf der inneren Mantelfläche des Abschluss-Bechers(80) entlang. Sobald die Rotation der innersten Trommel-Bahn(37) die Mulden im Abschluss-Becher(80) in eine Position auf der verlängerten Achse der Spiralfedern(57) bringt, erhalten die Einrast-Kugeln(56) mehr Raum und gleiten durch die ausgeübten Federkräfte in die hemisphärischen Aussparungen im Abschluss-Becher(80). Bei manueller Drehung am Stellrad(1) ist dieser Vorgang spürbar, es wird ein minimaler Widerstand gegen die weitere Manipulation am Stellrad(1) ausgeübt. Wird die Summe der Haftungs-, Roll-, Gleitreibung und anderen hemmenden Kräften durch eine stärkere am Stellrad(1) ansetzende Kraft überwunden, so dreht sich die innerste Trommel-Bahn(37) und damit der Abschluss-Becher(80) weiter und die Einrast-Kugel(56) werden aus den Vertiefungen gedrängt und damit die Spiralfedern(57) gegen ihre Federkraft wieder zusammengedrückt. Die Einrast-Kugeln(56) rollen weiter auf der inneren Mantelfläche des Abschluss-Bechers(80), bis durch weitere Rotation die hemisphärischen Vertiefungen wieder Platz für den nächsten Einrast-Moment bereiten. Die Summe der Federkräfte und anderen hemmenden Kräften dieses Einrast-Apparates, aufgebaut zwischen der Innenseite des Abschluss-Bechers(80) und der Außenseite des Zentral-Rohrs(49), bestehend aus den Einrast-Kugeln(56), den hemisphärischen Vertiefungen im Abschluss-Becher(80) und den Spiralfedern(57), ist größer, als die Summe der Federkräfte der Spiralfedern(74) und die umgebenden hemmenden Kräfte beim Einrast-Mechanismus, aufgebaut zwischen den Trommelbahn-Körpern(73) und den Trägerringen(76). Diese wichtige Bedingung ermöglicht die Einstellung des Haupt-Zugangscodes in der Code-Anzeige(2), ohne, dass die Trägerringe(76) auch in Bewegung versetzt und über weitere, anschließend beschriebene, mechanische Kopplungen andere Trommel-Bahnen(37, 38, 39, 40, 41, 42, 43,44) unabsichtlich rotiert werden. Der Abschluss-Becher(80) ist nicht drehbar und fest mit dem Boden des Außengehäuses verbunden. Er bildet das physikalische Widerlager des Einrast-Apparates gegenüber den sich drehenden Trägerringen(76) und Trommel-Bahnen(37, 38, 39, 40, 41, 42, 43,44). Bei gedrücktem Haupttrieb(10) wird durch die Drehung am Stellrad(1) über den beschriebenen Weg der mechanischen Koppelung bis zum Haupt_Trägerrad(58) die innerste Trommel-Bahn(37) in Rotation versetzt. Es besteht ein Übersetzungsverhältnis vom Stellrad(1) zum Haupt_Trägerrad(58) von eins zu fünf. Welche Zeichen-Trommel(19) tatsächlich auf der Position der Zeichen-Walze(22), also der 90 Grad-, respektive 15 Uhr-Position zum Stehen kommt, hängt einzig vom Umfang der willkürlichen, manuellen Drehbewegung am Stellrad(1) ab, da das Stellrad(1) nicht zwingend bei einer der vordefinierten und auf dem oberen Rand des Gehäuses durch die Zahlen von null bis und mit neun markierten Winkelpositionen angehalten werden muss. Mit diesem Vorgang wird die hinterste, in diesem Fall die achte Ziffernstelle des Passwortes definiert. Die achte Ziffernstelle wird durch das in der Zenit-Position der betreffenden Zeichen-Trommel stehende Zeichen ausgefüllt und ist in der Passwort-Anzeige(3) ganz rechts zu sehen. Damit auch die anderen Zeichenstellen des Passwortes in unvorhersehbarer Weise besetzt werden, ist die Karussell-Mechanik(Zeichnung 11 und 12) mit dem Vermittler-Rad(69) des Haupttriebs(10) erstinstanzlich über das Haupt_Trägerrad(58) verbunden. Die Karussell-Mechanik(Zeichnung 11 und 12) ist ein Teil des Stellwerks(15) und wird durch die manuelle Drehung am Stellrad(1) bei gedrücktem Haupttrieb(10) angetrieben. Das Stellrad(1) seinerseits gehört zum Verwischer-Werk(13) und entspricht in seiner Geometrie einer kreisförmigen Ringscheibe(81), deren innerer Radius etwas größer ist, als der äußerste Radius des Trommelbahn-Körpers(73) der äußersten Trommel-Bahn(44). Am äußeren, oberen Rand ist eine regelmäßige, wellenförmige Bördelung um den ganzen Umfang des Stellrades(1) eingelassen, damit die manuelle Bedienung angenehm von Statten gehen kann und ein Abrutschen der Finger verhindert wird. Direkt unterhalb der kreisförmigen Ringscheibe(81) verlängert sich das Stellrad(1) mit einem Becher-förmigen Hohlzylinder, dem Stellrad-Becher(47), der die Gesamtheit der Zeichen-Trommeln(19) des Stellwerks(15) mit seiner inneren Mantelfläche umgibt. In seiner Ruheposition ist das ausgebohrte Sichtfenster(12) in der kreisförmigen Ringscheibe des Stellrads(1) in der null Grad-, respektive 12 Uhr-Position zu sehen. Es erlaubt die Sicht auf den oberen Rand des unbeweglichen Gehäuserahmens(86), dem beginnend mit der Zahl null, alle 36 Grad eine um eins erhöhte Zahl aufgemalt oder eingraviert ist. Auf der 12 Uhr-Position ist durch das Sichtfenster(12) die Zahl null zu sehen, es folgen die Zahlen eins, zwei, drei, vier, fünf, sechs, sieben, acht und schließlich die neun in regelmäßigen Winkelabständen von 36 Grad. Damit diese Positionen durch manuelle Drehung am Stellrad getroffen und gehalten werden können, ist zwischen dem Stellrad-Becher(47) und dem Gehäuserahmen(86) der Erfindung ein Einrast-Mechanismus eingesetzt, der wiederum aus einer Stellrad-Becher(47)-seitigen hemisphärischen Vertiefung und einer korrespondierend an der Innenfläche des Gehäuserahmen(86) festgemachten Spiralfeder, welche eine Kugel gegen den Stellrad-Becher(47) drückt, besteht. Es sind an der äußeren Wand des Stellrad-Bechers(47) insgesamt zehn hemisphärische Vertiefungen in regelmäßigen Abständen von 36 Grad eingelassen. Zusätzlich hat die kreisförmige Ringscheibe(81) des Stellrads(1) von oben betrachtet, auf derselben Winkelposition, wie auch das Sichtfenster(12) liegt, einen quaderförmigen Fortsatz(82), der senkrecht von der unteren Oberfläche der Ringscheibe(81) weg ragt und fester Bestandteil der Ringscheibe(81) ist. Unmittelbar an seiner, von oben betrachtet linken Seitenfläche ist eine lange Repositions-Spiralfeder(83) angebracht, welche, ausgehend vom Fortsatz(82) und wiederum von oben betrachtet, im Gegenuhrzeigersinn auf der äußeren Mantelfläche des Gehäuserahmens(86) der Erfindung ganz um dieselbe führt und am Ursprungs-Lager(85), welches auf einer 30 Grad-, respektive 13 Uhr-Position auf der Mantelfläche des Gehäuserahmens(86) der Erfindung festgemacht ist. Bei einer manuellen Drehung des Stellrads(1) im Uhrzeigersinn, wird durch diese Konstruktion die Repositions-Spiralfeder(83) gespannt. Das ebenfalls auf der äußeren Mantelfläche des Gehäuserahmens(86) der Erfindung festgemachte, quaderförmige Wideriager(84) verhindert, dass die Repositions-Spiralfeder(83) das losgelassene Stellrad(1) weiter zurückdreht, als bis zur null Grad-, respektive 12Uhr-Position, bei Betrachtung von oben, indem es den Fortsatz(82) der kreisförmigen Ringscheibe(81) des Stellrads(1) am Vorbeidrehen hindert. Die Federkraft der Repositions-Spiralfeder(83) muss größer sein, als die Summe aller, ihr entgegenwirkenden Haftungs-, Reibungs-, Rollwiderstands- und anderer Kräfte des Kodier-Werks(15) und insbesondere der Karussell-Mechanik(Zeichnung 11 und 12), um eine Reposition des Stellrads(1) zur null Grad-, respektive 12 Uhr-Position ohne zusätzliche, manuelle Unterstützung bewirken zu können.

Ausgehend vom Vermittler-Rad(69) des Haupttriebs(10), welches das erste Element, das Haupt_Trägerrad(58) der Karussell-Mechanik(Zeichnung 11 und 12) antreibt, sind es die oberen_Planetenräder(50) und die unteren_Planetenräder(51), welche die Komponenten der Karussell-Mechanik(Zeichnung 11 und 12) miteinander mechanisch koppeln. Zur Karussell-Mechanik(Zeichnung 11 und 12) gehören neben den oberen_Planetenrädern(50) und den unteren_Planetenrädern(51) das Haupt_Trägerrad(58), die insgesamt acht Trägerringe(76) der Trommel-Bahnen(37,38,39,40,41,42,43,44), die oberen_Sonnenräder(54), die oberen_Hohlräder(53), die unteren_Sonnenräder(55) und die unteren_Hohlräder(52). Jeder der acht einzelnen Trägerring(76) besteht aus einem Trägerring-Körper(72), der auf seiner oberen, glatten, dem Trommelbahn-Körper(73) zugewandten Fläche eine Trommel-Bahn(37,38,39,40,41,42,43,44) trägt und sowohl einem Sonnenrad, das seine Zähne an der konvexen Außenseite des Zahnrads trägt, als auch einem Hohlrad, das seine Verzahnung an der konkaven Innenseite hat. Beginnend mit dem innersten Trägerring(76) der innersten Trommel-Bahn(37), verbindet nun das innerste untere_Planetenrad(51) das untere_Sonnenrad(55) des innersten Trägerrings(76) mit dem unteren_Hohlrad(52) des nächsten, radial nach außen folgenden Trägerrings(76) der unmittelbar benachbarten Trommel-Bahn(38). Die mechanische Koppelung des Trägerrings(76) der zweit innersten Trommel-Bahn(38) mit dem, radial von innen nach außen gezählt, dritten Trägerring(76) der ihm aufsitzenden Trommel-Bahn(39), wird durch ein oberes_Planetenrad(50) vermittelt, indem dessen Verzahnung einerseits in jene des oberen_Sonnenrades(54) des Trägerrings(76) der zweit innersten Trommel-Bahn(38) und andererseits in die Verzahnung es oberen_Hohlrades(53) des Trägerrings(76) der dritt innersten Trommel-Bahn(39) greift. Zwischen den Trägerringen(76) der dritten und vierten Trommel-Bahn(39 und 40) ist es wiederum ein oberes_Planetenrad(50), zwischen vierten und fünften Trommel-Bahn(40 und 41) ein unteres_Planetenrad(51), zwischen der fünften und sechsten Trommel-Bahn(41 und 42) ein oberes_Planetenrad(50), zwischen der sechsten und siebten Trommel-Bahn(42 und 43) ein unteres_Planetenrad(51) und schließlich zwischen der siebten und achten Trommel-Bahn(43 und 44) wieder ein oberes_Planetenrad(50), welches die Trägerringe(76) der bezeichneten Trommelbahnen(37,38,39,40,41,42,43,44) mechanisch verbinden. Zwischen den einzelnen Trägerringen(76) der einzelnen Trommel-Bahnen(37,38,39,40,41,42,43,44) ist zur mechanischen Vermittlung der Drehbewegung jeweils ein Planetenrad(50 oder 51) eingesetzt. Zur Stabilisierung der Karussell-Mechanik(Zeichnung 11 und 12) des Stellwerks(15) können auch mehrere dieser Planetenräder(50,51) zur Verbindung zweier, benachbarter Trägerringe(76) eingesetzt werden, beispielsweise alle 120 Grad eines, was dann drei Planetenräder(50,51) pro Zwischenraum zur Folge hätte und eventuelle Schwingungen der Mechanik dämpfen oder verhindern könnte. Weil die Rotation von einem Trägerring(76) durch nur eine mechanische, drehbare Einheit, dem Planetenrad(50 oder 51) auf den unmittelbar benachbarten Trägerring(76) übertragen wird, drehen sich die Trägerringe(76) und ihre, auf ihnen geführten Trommel-Bahnen(37,38,39,40,41,42,43,44) jeweils in der entgegengesetzten Drehrichtung, wie ihr unmittelbar von innen nach außen gezählt, vorgeschalteter Trommelring(76), unabhängig davon, wie viele Planetenräder(50 oder 51) zwischen zwei benachbarten Trägerringen(76) in paralleler, nicht serieller Anordnung angelegt sind. Die Sonnen- und Hohlräder eines Trägerrings(76) sind in ihrer Anordnung so übereinanderliegend, dass sie beide denselben Radius haben. Weil alle Planetenräder(50,51) und alle Sonnen-(54,55), respektive Hohlräder(52,53) die gleiche Zahngröße verwenden, verhalten sich die Untersetzungsverhältnisse zwischen den einzelnen Trägerringen(76) der Trommel-Bahnen(37,38,39,40,41,42,43,44) von innen radial nach außen verstanden wie folgt i₁ : i₂ = 7 : 5, i₂ : i₃ = 9 : 7, i₃ : i₄ = 11 : 9, i₄ : i₅ = 13 : 11, i₅ : i₆ = 15 : 13, i₆ : i₇ = 17 : 15 und i₇ : i₈ = 19 : 17. Diese Konstellation der Untersetzungsverhältnisse ist mit Absicht so gewählt und widerspiegelt auch das Verhältnis der Radien und der Kreisumfänge der einzelnen Trägerringe(76) untereinander. Die Radien betragen von innen nach außen: r₁ = 5mm, r₂ = 7mm, r₃ = 9mm, r₄ = 11mm, r₅ = 13mm, r₆ = 15mm, r₇ = 17mm und r₈ = 19mm. Entsprechend verhalten sich die Kreisumfänge nach der Formel U = 2πr. Die Radien können auch anders gewählt werden, müssen aber im soeben aufgeführten Verhältnis zueinander stehen, das heißt, jeder Radius muss bei einem von der Vorgabe abweichenden Wert mit demselben Faktor x multipliziert werden, wie jeder andere der acht Radien. Es gilt allgemein die Vorgabe: r₁ = x * 5mm, r₂ = x * 7mm, r₃ = x * 9mm, r₄ = x * 11mm, r₅ = x * 13mm, r₆ = x * 15mm, r₇ = x * 17mm und r₈ = x * 19mm mit x als gemeinsamem Faktor. In direkter Abhängigkeit von dieser mathematischen Verallgemeinerung der Radius-Bestimmung, die so den Konstruktionsdimensionen angepasst werden kann, muss die Aufteilung der Trommelbahn-Kreise in einzelne, gleichgroße Kreissegmente und ihrer entsprechenden Kreisbogen vorgenommen werden. Entsprechend dem ganzzahligen Radius ohne Multiplikation mit einem beliebigen Faktor x, also den Grund-Radien 5mm, 7mm, 9mm, 11mm, 13mm, 15mm, 17mm, und 19mm, hat jede Trommel-Bahn(37,38,39,40,41,42,43,44) entsprechend dem Radius der Sonnen-(54,55), respektive Hohlräder(52,53) ihres Trägerrings(76) gleich viele Kreisabschnitte, wie der Radius in seinem Betrag ausmacht. Die acht Trommel-Bahnen(37,38,39,40,41,42,43,44) haben daher, ausgehend von der kleinsten, innersten Trommel-Bahn(37) fünf, sieben, neun, elf, dreizehn, fünfzehn, siebzehn und neunzehn Kreisabschnitte. Diese Kreisabschnitte sind pro Trommel-Bahn(37,38,39,40,41,42,43,44) gleichgroß und regelmäßig verteilt. Die Kreissegmente sind gemessen an ihrem Kreisbogen, den sie aufspannen am kleinsten bei der innersten Trommel-Bahn(37) und am größten in ihrer Kreisbogen-Abmessung auf der äußersten Trommel-Bahn(44). Die Beträge der gemessenen Kreisbogen ist auf Grund der aufgezählten Zusammenhänge über alle Trägerringe(76) der Trommel-Bahnen(37,38,39,40,41,42,43,44) gleich groß. Das bedeutet in der Konsequenz, dass bei einer Drehung einer beliebigen Trommel-Bahn(37,38,39,40,41,42,43,44) um einen ganzen Kreisbogen, respektive um einen Mittelpunktswinkel unter dem Kreisbogen ihrer selbst, vermittelt durch die mechanische Koppelung über die Planetenräder(50,51), alle übrigen Trommel-Bahnen(37,38,39,40,41,42,43,44) sich ebenfalls um den im Betrag gleichen Abschnitt ihres Kreisumfangs drehen, wenn auch die Mittelpunktswinkel unter den individuellen Kreisbogen auf Grund der verschiedenen Kreisradien unterschiedlich sind. Diese Abhängigkeit der gleichen Beträge der abgewälzten Abschnitte der individuellen Kreisumfänge bedeutet folglich, dass jede Drehung, welche eine Zeichentrommel soweit verschiebt, dass ihre unmittelbar folgende Zeichentrommel ihren bisherigen Platz einnimmt, dazu führt, dass auch alle anderen Trommel-Bahnen(37,38,39,40,41,42,43,44) sich um eine Zeichentrommel weiterbewegen. Alle diese Konstruktionsbedingungen garantieren in ihrer Gesamtheit den Durchlauf fast aller von diesem System möglichen Zeichenkombinationen zur Erzeugung eines Passwortes. Neben der Schaffung eines freien Winkel-Raumes für die Zeichen-Reihe(21) hat die ungerade Anzahl der Kreissegmente, welche der Anzahl der Zeichen-Trommeln(19) pro Trommel-Bahn(37,38,39,40,41,42,43,44) entspricht, zum Ziel, bei jeder Umdrehung einer bestimmten Trommel-Bahn(37,38,39,40,41,42,43,44), sich gegenüber der Position der Zeichen-Trommel der benachbarten Trommel-Bahn vor der Umdrehung, um zwei Positionen zu verschieben. Als Konsequenz der jeweils um zwei erweiterten Anzahl der Kreisabschnitte und somit Zeichen-Trommeln(19) pro Trommel-Bahn(37,38,39,40,41,42,43,44) gilt diese Eigenschaft für die Beschreibung jeder Neupositionierung zweier benachbarter Trommel-Bahnen(37,38,39,40,41,42,43,44) bei der Drehung am Stellrad(1) bei gedrücktem Haupttrieb(10). Die Wahl von ausschließlich ungeraden Anzahlen an Kreissegmenten pro Trommel-Bahn(37,38,39,40,41,42,43,44) und die Tatsache der um zwei Zeichen-Trommeln verschobenen Position bei einer vollständigen Umdrehung einer Trommelbahn gegenüber ihrer nächst größeren, benachbarten Trommelbahn, garantieren, dass sich nach einer bestimmten Anzahl Umdrehungen jede Zeichen-Trommel der einen Trommelbahn zu jeder Trommelbahn der benachbarten, größeren Trommelbahn gesellt hat. Die Trommelbahn mit der geringeren Anzahl an Kreissegmenten muss sich jeweils so oft drehen, wie die nächst größere Trommelbahn im Betrag ihrer Anzahl, Kreissegmente besitzt. Folglich muss sich die innerste, mit fünf Zeichen-Trommeln(19) besetzte Trommelbahn(37) ganze sieben Mal drehen, um sämtliche, mögliche Paarungen an Zeichen-Trommeln zwischen den beiden Trommel-Bahnen(37 und 38) zu erzeugen, weil die benachbarte, größere Trommel-Bahn(38) über sieben Kreissegmente, respektive Zeichen-Trommeln(19) verfügt. Damit jede Zeichentrommel der einen Bahn mit jeder Zeichentrommel der unmittelbar benachbarten, größeren Trommelbahn ein Paar bilden kann, muss das kleinste, gemeinsame Vielfache der Anzahl Zeichentrommeln der einen, und der Anzahl Zeichentrommeln der anderen Trommelbahn der Multiplikation der beiden Anzahlen an Zeichentrommeln gleich sein. Mit der Ausnahme der Kombinationen der Zeichentrommeln zwischen der innersten Trommel-Bahn(37) und der dritt äußersten Trommel-Bahn(42), deren Verhältnis an Zeichentrommeln fünf zu fünfzehn ist, und der Kombinationen der Zeichentrommeln zwischen der dritt innersten Trommel-Bahn(39) und der dritt äußersten Trommel-Bahn(42), deren Verhältnis an Zeichentrommeln neun zu fünfzehn ist, gilt die Forderung bezüglich dem kleinsten, gemeinsamen Vielfachen als Produkt der Anzahlen an Zeichentrommeln der beiden Trommel-Bahnen(37 und 42). In dem ersteren, eben beschriebenen Fall, ist das kleinste, gemeinsame Vielfache im Betrag fünfzehn und nicht fünfundsiebzig. Die kleinere Trommel-Bahn(37) muss sich nur drei Mal drehen, bis sich die gemeinsamen Zeichentrommel-Kombinationen wiederholen und es sind zwischen diesen beiden Trommel-Bahnen(37 und 42) nur drei mal fünf, also fünfzehn verschiedene Zeichentrommel-Kombinationen möglich. Weil die Anzahlen an Zeichentrommeln pro Trommel-Bahn(37,38,39,40,41,42,43,44) mit Ausnahme vom Betrag neun, der, von innen nach außen gezählt dritten Trommel-Bahn(39) und der bereits erwähnten, sechsten Trommel-Bahn(42) von innen nach außen gezählt mit fünfzehn Zeichentrommeln, alles Primzahlen sind, bleibt nur noch der Fall der von innen gezählt dritten Trommel-Bahn(39) gesondert zu betrachten. Gemäß der Vorgabe müsste das kleinste, gemeinsame Vielfache der Anzahlen der Zeichentrommeln der beiden Trommel-Bahnen(39 und 42), die letztere hat fünfzehn Zeichentrommeln, im Betrag 9 x 15 = 135 sein, was aber nicht zutrifft. Das kleinste, gemeinsame Vielfache der Zahlen neun und Fünfzehn beträgt 45. Nach fünf Umdrehungen der dritt innersten Trommelbahn(39) hat sich die dritt äußerste Trommel-Bahn(42) drei mal gedreht und ab diesem Zeitpunkt wiederholen sich die Paar-Kombinationen zwischen diesen beiden Trommel-Bahnen(39 und 42) fortlaufend, ohne, dass alle möglichen Paarbildungen zwischen diesen beiden Trommel-Bahnen(39 und 42) durchlaufen werden. Somit ergibt sich eine Verminderung der Gesamtzahl an möglichen Zeichentrommel-Paarungen auf Grund der beiden Trommel-Bahnen(39 und 42) mit den Zeichentrommel-Anzahlen neun und fünfzehn. Der Betrag der in diesem Trommelbahn-System theoretisch möglichen Zeichentrommel-Kombinationen errechnet sich aus der Multiplikation der einzelnen Zeichentrommel-Mengen pro Trommelbahn miteinander. In dieser Ausführung der Erfindung beträgt diese Rechnung: 5 x 7 x 9 x 11 x 13 x 15 x 19 = 218'243'025. Dieses Produkt muss nun wegen der erwähnten Reduktion an Kombinationen durch die Faktoren fünf und drei dividiert werden, um die tatsächliche Anzahl der Zeichentrommel-Permutationen zu erhalten: 218'243'025 / (5×3) = 14'549'535. Diese, bereits enorme Fülle an Trommelbahn-Kombinationen wird durch das Zusammenspiel des Stempelwerks(16), des Kodierwerks(17) und des Pendelwerk s(18) nochmals massiv erweitert. Wie in dieser Schrift weiter oben erläutert, verfügt jede Zeichen-Trommel(19) über sechs unterschiedliche Zeichen. Total steht in dieser Ausführung der Erfindung ein Zeichensatz von 72 Zeichen, bestehend aus den 26 Kleinbuchstaben des Alphabets, den 26 Großbuchstaben des Alphabets, der ganzen Zahlen von und mit null, bis und mit neun und einer Auswahl der gängigsten Sonderzeichen, die hier mit zehn in ihrer Anzahl beziffert wird, zur Verfügung. Die Anzahl der Sonderzeichen kann durchaus größer sein oder nach Sprachregion reduziert oder erweitert werden. Wie es in der Folge des Textes erklärt wird, ist das Stempelwerk(16), in seiner Konstellation definiert durch das vom Pendelwerk(18) angetriebene Kodierwerk(17), in der Lage die einzelnen Zeichen-Trommeln(19) zu rotieren und somit die unterschiedlichen Zeichen einer individuellen Zeichen-Trommel(19) in einer Ziffernstelle der Passwort-Anzeige(3) zu platzieren. Für die Berechnung der theoretisch möglichen Permutationen über alle Zeichen des achtstelligen Passworts muss die maximale Anzahl unterschiedlicher Zeichen pro Zeichen-Stelle im Passwort berücksichtigt werden. Es stehen pro Trommel-Bahn(37, 38, 39, 40, 41, 42, 43, 44), respektive pro Zeichenstelle des Passworts insgesamt 72 verschiedene Zeichen zur Auswahl. Weil die innerste Trommel-Bahn(39) nur fünf Zeichentrommeln besitzt, ist deren maximale Zeichenmenge auf 5 x 6 =30 Zeichentrommeln begrenzt. Von innen nach außen aufsteigend ergeben sich unter Berücksichtigung dieser Einschränkung folgende Zeichenmengen pro Trommel-Bahn(37, 38, 39, 40, 41, 42, 43, 44): 30, 42, 54, 66, 72, 72, 72, 72. Die vier größten Trommel-Bahnen(41, 42, 43, 44) haben alle 72 verschiedene Zeichen, obwohl sie über Zeichen-Platz für 78, 90,102 und 114 Zeichen verfügen würden. Ihre Überkapazität wird durch sich wiederholende Zeichen aus dem Zeichensatz von 72 Zeichen belegt. Die Multiplikation der einzelnen Zeichen-Mengen pro Trommel-Bahn(37, 38, 39, 40, 41, 42, 43, 44) untereinander ergibt die theoretisch maximale Anzahl an Permutationen: 30 x 42 x 54 x 66 x 72 x 72 x 72 x 72 = 120'680'812'707'840, gerundet: 120 x 10¹².

Um dieses zu ermöglichen sind entlang der Trommel-Bahnen(37, 38, 39, 40, 41, 42, 43, 44), jeweils am inneren, kleineren Radius der Trommel-Bahnen(37, 38, 39, 40, 41, 42, 43, 44), im Zwischenraum zweier benachbarter Trommel-Bahnen(37, 38, 39, 40, 41, 42, 43, 44) insgesamt sechs Stempel(87) so angebracht, dass sie entweder die Mitnehmer-Bolzen(24) der Zeichen-Trommeln(19) unberührt passieren lassen oder aber ein Hindernis für die Mitnehmer-Bolzen(24) der Zeichen-Trommeln(19) darstellen und ihnen bei der Passage im Wege sind. Ob ein Stempel-Schaft(88) einen Mitnehmer-Bolzen(24) berührt oder nicht auf dessen Passier-Höhe liegt, hängt davon ab, ob er in der gedrückten, erhöhten Position steht oder, ob er in der Normalstellung, vom Deckblatt(12a) weg, nach unten positioniert ist. Damit ein Stempel-Schaft(88) zwischen diesen beiden Positionen wechseln kann, hat der Stempel(87) einen Aufbau, der es erlaubt, beide Positionen, die erhöhte oder eben die tiefere Normalstellung in beiden Fällen durch einen Druck von unten in Richtung Deckblatt(12a) nach oben zu erreichen. Dazu besteht der Stempel (87) aus dem Hauptelement, dem Stempel-Schaft(88), der am unteren Ende über eine eingefräste Ringnut(92) verfügt, in die das obere Ende des nicht spitzen, abgetrennten Kipp-Trichters(90) mit seiner in einen Kreis mündenden Mantelfläche greift. Mit seiner Mantelfläche berührt der Kipp-Trichter(90) den unteren Rand des Stempel-Rohrs(89), der dem Kipp-Trichter(90) einerseits ein Widerlager, andererseits die Führung für den Kipp-Vorgang ist. In der Zeichnung(15) ist der Stempel(87) in der gedrückten, also mit dem Stempel-Schaft(88) in erhöhter Position dargestellten Stellung abgebildet. Damit der Stempel-Schaft(88) von der erhöhten in die tiefere Stellung wechseln kann, muss mit dem Schablonen-Rohr(93), das im Durchmesser den Kipp-Trichter(90) übertrifft und mit seinem oberen Rand den unteren Trichter-Rand des Kipp-Trichter(90) aufnimmt, ohne, dass dieser innen oder außen am Schablonen-Rohr(93) vorbei schleifen kann, nach oben, gegen den Kipp-Trichter(90) gedrückt werden. Damit der Kipp-Trichter(90) umklappen kann, ist dieser aus einem hauchdünnen federnden Material gefertigt und seine Mantelfläche ist durchgängig von der unteren, größeren, kreisförmigen Begrenzung, bis zur oberen, kleineren, kreisförmigen Begrenzung in Form des Trichter-Spalts(92) durchtrennt. Somit kann sich der Kipp-Trichter(90) bei Druckausübung durch das Schablonen-Rohr(93) und dem Anstoßen am Stempel-Rohr(89) verformen und greift gleichzeitig, während des ganzen Bewegungsablaufs mit seinem oberen, kleineren Kegel-Ende in die Ringnut(92) des Stempel-Schafts(88). In umgekehrter Weise kann der Stempel-Schaft(88) von der tieferen in die erhöhte Position gebracht werden, indem ein Schablonen-Bolzen(94), im Durchmesser gleich groß, wie der Stempel-Schaft(88), von unten nach oben gegen das untere Ende des Stempel-Schafts(88) nach oben, in Richtung Deckblatt(12a) drückt. Über die Ringnut(92) nimmt der bewegte Stempel-Schaft(88) das nun unten liegende, kleinere Ende des Kipp-Trichter(90) mit und verursacht auf seinem Weg nach oben das Umklappen des Kipp-Trichters(90), der dem Rand des Stempel-Rohrs(89) als Widerlager nicht ausweichen kann.

Jeder der insgesamt acht Trommel-Bahnen(37, 38, 39, 40, 41, 42, 43, 44) sind jeweils zwölf Stempel(87) zugewiesen, die auf ihren Stempel-Positionen(95) entlang der betreffenden Trommel-Bahn(37, 38, 39, 40, 41, 42, 43, 44) verteilt sind. Folglich gibt es in dieser Ausführung der Erfindung insgesamt 96 Stempel(87), verteilt auf ebenfalls 96 Stempel-Positionen(95). Um die Funktion der Erfindung zu gewährleisten muss eine Zeichen-Trommel(19) pro vollständigem 360 Grad-Umlauf genau sechs mal um ein Zeichen auf seiner Mantelfläche weiter rotiert werden, respektive sie muss selber eine vollständige Umdrehung vollziehen. Diese Vorgabe stellt sicher, dass die Zeichen-Trommeln(19) nach einem vollständigen Umlauf auf der Trommelbahn immer dasselbe Zeichen in der Zenit-Position anzeigen, wie dies beim Start der Rotationsbewegung war. Damit steht einem Zeichen-Podest(20), das sich in der Zeichen-Reihe(21) befindet immer dasselbe Zeichen in der Zeichen-Walze(22) gegenüber. Da eine Zeichen-Trommel(19) pro 360 Grad-Umlauf auf ihrer Trommelbahn alle zwölf Stempel-Positionen(95) passiert, dürfen nur sechs der zwölf Stempel(87) in der erhöhten, gedrückten Stellung sein. Diese sechs Stempel-Positionen(95) mit den sechs Stempeln(87) in erhöhter Position können auf der 360 Grad Kreisbahn unmittelbar hintereinander oder eben beliebig verteilt sein. Durch diese beliebige Verteilung der sechs gedrückten in erhöhter Position vorliegender Stempel, ist es möglich, dass einem 180 Grad gegenüberliegenden Zeichen-Podest(20) jedes der sechs Zeichen der entsprechenden Zeichen-Trommel(19) zugewiesen sein kann. Wird das Stempelmuster, also die Verteilung der sechs gedrückten, in erhöhter Position vorliegender Stempel(87) innerhalb der zwölf Stempel-Positionen(95) nicht verändert, so wird pro Trommel-Bahn(37, 38, 39, 40, 41, 42, 43, 44) einem Zeichen-Podest(20) in der Zeichen-Reihe(21) immer dasselbe Zeichen in der Zeichen-Walze(22) gegenüberstehen.

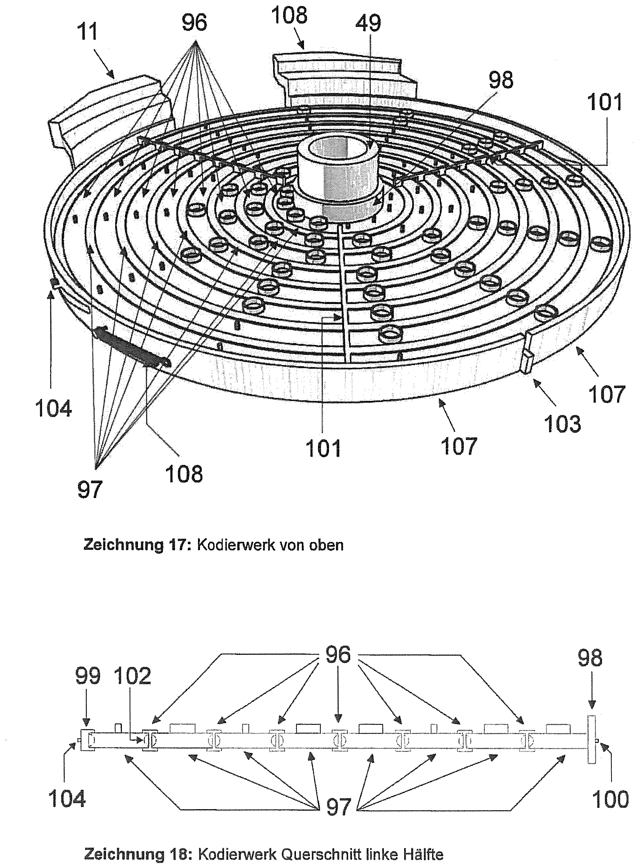

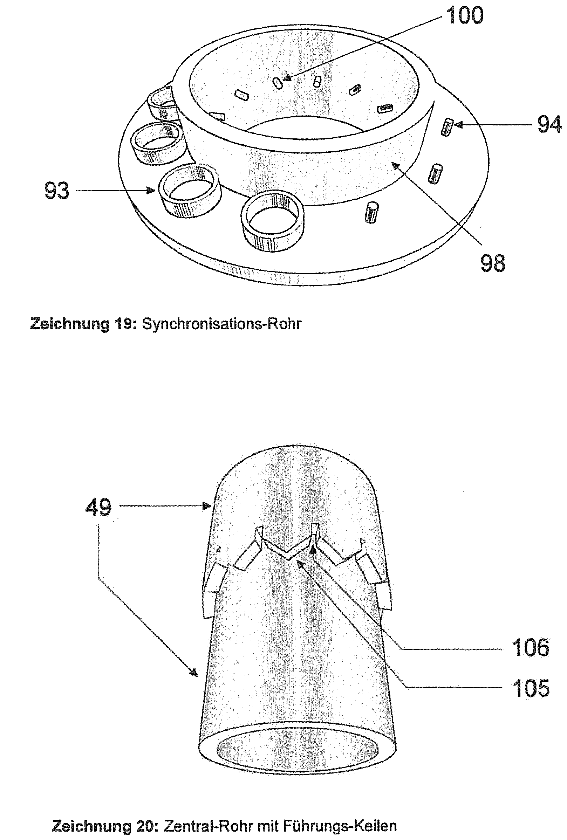

Für die Konstellation des Stempelmusters ist das Kodierwerk(17) verantwortlich. Es ist unmittelbar unter dem Stempelwerk angeordnet und besteht in seinem Grundkörper aus den acht Schablonen-Ringen(96), die pro Ring sowohl sechs Schablonen-Rohre(93), als auch sechs Schablonen-Bolzen(94) tragen und den im Querschnitt H-förmigen, (Zeichnung 18) sieben Führungsringen(97). Die Führungsringe(97) nehmen radial nach außen und radial nach innen jeweils einen Schablonen-Ringe(96) auf und verhindern durch ihre Überlappung sowohl auf der Unter-, als auch Oberseite der benachbarten Schablonen-Ringe(96), dass diese ihre Arbeits-Ebene nach oben oder nach unten verlassen können. Die senkrechten Mittel-Membranen der H-förmigen Kreisprofile sind in regelmäßigen Abständen mit horizontal verlaufenden Lochbohrungen durchdrungen, die kleine Stahlkugeln(102) aufnehmen. In die inneren und äußeren Seitenwände der Schablonen-Ringe(96) sind jeweils hemisphärische Längsnuten eingefräst. Diese nehmen die Stahlkugeln(102) auf und die Schablonen-Ringe(96) rollen auf diesen ab. Der äußerste Schablonen-Ring(96) wird an seiner äußeren Mantelfläche durch den Abschluss-Ring(99), der seinerseits im Querschnitt einem im Uhrzeigersinn um 90 Grad gedrehten U-Profil entspricht, geführt. Zur Aufnahme der Stahlkugeln(102) sind im Abschluss-Ring(99) ebenfalls in regelmäßigen Abständen hemisphärische Mulden eingelassen. Von oben betrachtet, bei der Winkelposition von 90 Grad, respektive in der 15 Uhr-Position ist der Abschluss-Ring(99) um den Leit-Quader(103) erweitert, einem Profilfortsatz, der radial nach außen ragt und in einer Nut des Gehäuserahmen des Gesamtmechanismus, entlang der Z-Achse bei liegender Erfindung, bei Anhebung des Kodierwerks(17) in beide Richtungen, sowohl nach oben, als auch nach unten gleiten kann. Zusammen mit den beiden Hebe-Bolzen(104) sorgt der Leit-Quader(103) dafür, dass der gesamte Führungsapparat, bestehend aus den sieben Führungsringen(97), dem Abschluss-Ring(99), und den drei Querträgern(101) sich nicht drehen kann und so den Schablonen-Ringen(96) beim Abrollen an den Stahlkugeln(102) ein Widerlager bildet. Bei den drei Querträgern(101) handelt es sich um radial von innen nach außen verlaufende quaderförmige Profilleisten, welche die einzelnen Führungs-Ringe(97) und den Abschluss-Ring(99) jeweils über einen kleinen Sockel fest miteinander verbinden. Die Sockel erhöhen die Lage der Querträger in ihrem Verlauf soweit, dass sie die einzelnen Schablonen-Rohre(93) und Schablonen-Bolzen(94) bei ihrer Rotation nicht berühren. Der innerste der Schablonen-Ring(96) ist mit seiner inneren Mantelfläche fest mit dem Synchronisations-Rohr(98) verbunden. Dieses wiederum überragt die Höhen der Schablonen-Ringe(96) und der Führungsringe(97) und hat einen Innendurchmesser, der minimal größer ist, als es der Außendurchmesser des Zentral-Rohrs(49) ist und lässt sich daher entlang des Letzteren in beide Richtungen bewegen. In die innere Mantelfläche des Synchronisations-Rohrs(98) sind zwölf Synchronisations-Bolzen(100) eingelassen und fest mit dem Synchronisations-Rohr(98) verbunden. Diese zwölf Synchronisations-Bolzen(100) gewähren die exakte Funktion des Kodierwerks(17) und stellen sicher, dass bei der Hebung des Kodierwerks die einzelnen Schablonen-Rohre(93) und Schablonen-Bolzen(94) präzise in der verlängerten Z-Achse jeweils einer Stempel-Position(95) zu liegen kommen. Dazu sind von der äußeren Mantelfläche des Zentral-Rohrs(49) ausgehend, zwölf Dreieckförmige Führungs-Keile(105) in regelmäßigen Winkelabständen derart ausgefräst, dass deren Spitzen nach unten zeigen und die zwölf Synchronisations-Bolzen(100) des Synchronisations-Rohrs(98) in den Zwischenräumen der Führungs-Keile(105) aufgenommen werden können. Dabei gleiten die Synchronisations-Bolzen(100) entlang den schrägen Außenflächen der vom Zentral-Rohr(49) konvex ausgebildeten zwölf Führungs-Keile(105), um schließlich in den zwölf Positions-Nuten(106), welche jeweils eine Verlängerung der Gleitbahn für die Synchronisations-Bolzen(100) in positiver Z-Richtung darstellen, zu liegen zu kommen (Zeichnung 18 und 19).

Damit das Stempelmuster, in seiner Ausgestaltung abhängig von der Verteilung der Schablonen-Rohre(93) und den Schablonen-Bolzen(94) auf den verschiedenen Schablonen-Ringen(96) auf das Stempelwerk(16) übertragen werden kann, muss das gesamte Kodierwerk bei liegender Erfindung in positiver Richtung der Z-Achse nach oben verlagert und mit den Schablonen-Rohren(93) und den Schablonen-Bolzen(94) gegen die Kipp-Trichter(90), resp. die Stempel-Schafte(88) der Stempel(87) gepresst werden. Dazu ist der Abschluss-Ring(99) des Kodierwerks(17) von den beiden kreisförmigen Hebe-Schalen(107), anliegend umfasst. Auf der 90 Grad-, respektive der 15 Uhr-Position lassen die beiden Hebe-Schalen(107), die in ihrer Höhe die Ausdehnung der Führungs-Ringe(97), den Abschluss-Ring(99) und die Schablonen-Ringe(96) sowohl in positiver, als auch in negativer Z-Richtung übertreffen, einen kleinen Spalt frei und berühren sich nicht, um dem Leit-Quader(103) die Möglichkeit zu geben, sich in beide Z-Richtungen frei nach oben und unten zu bewegen. Auf der gegenüberliegenden Seite, auf der 270 Grad-, respektive 21 Uhr-Position lassen die beiden Hebe-Schalen(107) einen größeren Bereich frei und berühren sich ebenfalls nicht. Sie enden auf dieser Seite jeweils in einem Kodierschieber(11), die es ermöglichen, die Hebe-Schalen(107) willkürlich, manuell so zu verschieben, dass die beiden Kodierschieber(11) sich schließlich in der 21 Uhr-, respektive 270 Grad-Position berühren und sich gegenseitig an der Weiterbewegung hindern. Die Rückführung der beiden Hebe-Schalen(107) läuft automatisch ab, sobald die beiden Kodierschieber(11) losgelassen werden. Je eine Lange_Spiralfeder(108) ist dazu so an der äußeren Mantelfläche einer Hebe-Schale(107) befestigt und mit der inneren Wandung des Gehäuserahmen verbunden, dass sie bei der Normalstellung der Hebe-Schalen(107) komplett entspannt ist. In der Normalstellung der Hebe-Schalen(107) ist der Spalt zwischen den beiden Kodierschieber(11) maximal groß und die von den Hebe-Schalen(107) eingeschlossenen Komponenten des Stempelwerks(17) in nicht-angehobener Position. Durch manuelles Zusammenführen der Schieber-Fortsätzen(108), welche durch den Gehäuserahmen nach außen geführt sind, werden die Lange_Spiralfedern(108) gespannt und die von den Hebe-Schalen(107) umfassten Komponenten des Kodierwerks(17) angehoben und so das Stempelmuster auf das Stempelwerk(16) übertragen. Die Hebe-Bewegung entsteht dadurch, dass die beiden Hebe-Bolzen(104) am Abschluss-Ring(99) in jeweils einer der beiden in die Hebe-Schalen(107) eingefrästen Schräg-Nuten(109) laufen und sich mit dem Abschluss-Ring(99) weder in Uhr- noch Gegenuhrzeigersinn drehen können, weil sowohl der Leit-Quader(103), als auch die beiden Hebe-Bolzen(104) in ihrer Verlängerung radial nach außen geführt in einer senkrechten Führungsnut in der Gehäusewand nach oben und unten laufend in Position gehalten werden. Die Schräg-Nuten(109) sind jeweils so in die Hebe-Schalen(107) eingefräst, dass sie im Falle der unteren Hebe-Schale(107), also jene Schale, die den Kreisabschnitt von ca. 15 Uhr bis ca. 20 Uhr abdeckt, wenn diese in Ruheposition ist, zunächst mit ihrem Beginn als Lochbohrung den unteren Hebe-Bolzen(104) hemisphärisch umgibt, um danach waagerecht, von oben betrachtet im Gegenuhrzeigersinn ein kurzes Stück weiter zu verlaufen, um dann die verbleibenden ca. fünf Sechstel des Gesamtverlaufs in einem ca. 30 Grad Winkel anzusteigen. Ihren Abschluss findet die Nut wiederum in einer kreisförmigen Lochbohrung, die den Hebe-Bolzen(104) wiederum hemisphärisch umgibt und gleichzeitig die in Z-Richtung höchste Lage des Stempelwerks markiert. In genau gleicher Weise ist auch in die obere Hebe-Schale(107) eine Schräg-Nut(109) eingefräst, welche bei Betrachtung der Erfindung von oben, ebenfalls ihren tiefsten Punkt links der Medianebene hat, um schließlich auch nach rechts, von der Medianebene weg, anzusteigen. In der Konsequenz dieser Anordnung der beteiligten Komponenten und dem Verlauf der beiden Schräg-Nuten(109) bedingt das manuelle Zusammenführen der beiden Kodierschieber(11) aufeinander zu, dass sich die von den Hebe-Schalen(107) umschlossenen Teile des Kodierwerks(17) anheben und so das Stempelmuster übertragen.

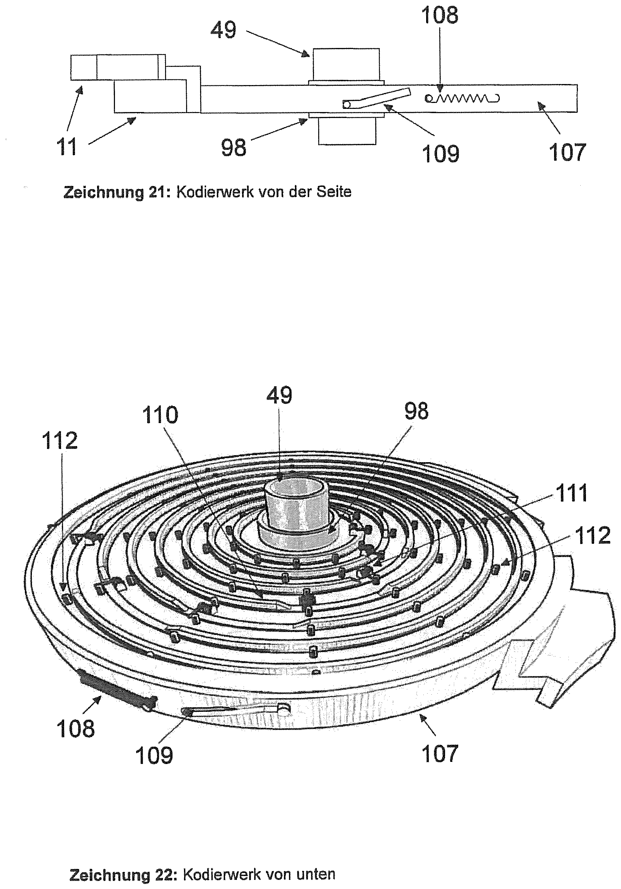

Für die Veränderung des Stempelmusters sind die Schablonen-Ringe(96), die sieben Führungs-Leisten(110), die sieben Feder-Böcke(111) und die siebzig Schiebe-Bolzen(112) auf der Unterseite des Kodierwerks(17) verantwortlich (Zeichnung 21 und 22). Damit die ganze mögliche, der für die, bei flach liegender Erfindung obere Hemisphäre relevanten Anzahl der Anordnung, resp. Verteilung von Schablonen-Rohren(93) und Schablonen-Bolzen(94) durchlaufen werden kann, muss im Sinne eines Zählers, bei jeder vollständigen Umdrehung,also dem Durchlaufen von zwölf Stempelpositionen, der unmittelbar gegen außen benachbarte Schablonen-Ring(96), um eine Stempelposition, demnach um 30 Grad im Winkel weitergedreht werden. Dazu sind mit Ausnahme des innersten, kleinsten Schablonen-Rings(96) alle nach außen folgenden Schablonen-Ringe(96) mit zwölf zylinderförmigen Schiebe-Bolzen(112) bestückt. Diese sind jeweils fest mit dem betreffenden Schablonen-Ring(96) verbunden und überragen in ihrer Höhe die Führungs-Leisten(110) um den Betrag des Durchmessers eines Feder-Fortsatzes(113). Die Führungs-Leisten(110) wiederum sind feste Bestandteile der einzelnen Schablonen-Ring(96) und erhöhen diese in negativer Z-Richtung. Jede der Führungs-Leisten(110) entspricht im Querschnitt einem Rechteckprofil und jede einzelne zeichnet in ihrer Ausdehnung eine Kreisform, die nicht vollständig geschlossen ist. Alle Führungs-Leisten(110) sind über einen Winkel-Abstand von ca. 35 Grad unterbrochen und an beiden Enden mit einer um ca. 30 Grad geneigten Leisten-Rampe(114) auslaufend konstruiert. Wenn sich ein Schablonen-Ring(96) dreht, dann bewegt sich auch der Feder-Bock(111), der auf dem betreffenden Schablonen-Ring(96) fest montiert ist. Er besteht aus zwei senkrecht stehenden Stützen in Form zweier kurzer, oben kreisförmig abgerundeter, rechteckiger Flachprofile, die im Mittelpunkt des Kreises ihrer Abrundung jeweils eine Lochbohrung haben, die eine waagrecht liegende zylinderförmige, fest mit den Seitenstützen verbundene Achse aufnehmen. Diese quer liegende Achse trägt ihrerseits eine kleine_Spiralfeder(115), welche am einen Ende fest mit einer Seitenstütze des Feder-Bocks(111) verbunden ist, und am anderen Ende in einer Verlängerung, dem Feder-Fortsatz(113), der waagerecht, parallel zur Oberfläche der Schablonen-Ringe(96) verläuft, endet. Für den zählenden Charakter der Mechanik auf der Unterseite des Kodierwerks(17) ist der Feder-Fortsatz(113) bestimmend. Er läuft, unter Betrachtung der Erfindung von oben, bei einer Rotationsbewegung des ihn tragenden Schablonen-Rings(96) im Uhrzeigersinn, solange auf dem radial nach außen benachbarten Führungs-Leisten(110), bis die fallende Leisten-Rampe(114) erreicht ist. Die Federkraft der kleinen_Spiralfeder(115) drückt den Feder-Fortsatz(113) auf die Oberfläche der Leisten-Rampe(114), solange, bis die tiefer liegende Ebene der Oberfläche des Schablonen-Rings(96) erreicht ist, auf welcher der Feder-Fortsatz(113) weiterläuft, bis er einen Schiebe-Bolzen(112), an dem er anstößt, erreicht. In der Folge wird der radial nach außen benachbarte Schablonen-Ring(96) durch die Kraft, welche der Feder-Fortsatz(113) auf den Schiebe-Bolzen(112) ausübt, gedreht Dieser Vorgang hält solange an, bis der Feder-Fortsatz(113) in seine Bewegung auf der Kreisbahn seines Schablonen-Rings(96) auf die steigende Leisten-Rampe(114) seiner radial nach außen benachbarten Führungs-Leiste(110) trifft, sich auf der Oberfläche der Leisten-Rampe(114) weiter bewegt, um schließlich wieder das Niveau der Oberfläche des Führungs-Leisten(110) zu erreichen. An diesem Punkt übertrifft die Höhe der unteren Tangentialebene an den Zylinder des Feder-Fortsatzes(113) die Höhenlage der oberen Zylinderfläche des Schiebe-Bolzen(112) und der benachbarte Schablonen-Ring(96) wird nicht mehr weiter rotiert. Indes bewegt sich der Feder-Fortsatz(113) weiter entlang der Oberfläche des Führungs-Leisten(110), bis er wieder auf die fallende Leisten-Rampe(114) trifft und der Zählvorgang um eine Iteration erweitert wird. Weil jeder Schablonen-Ring(96) über zwölf Schiebe-Bolzen(112), aber nur einen Feder-Bock(111) verfügt, können in der oberen Hemisphäre des Kodierwerks(17), das sechs Stempel-Positionen(95) hat, insgesamt sechs Fakultät an Permutationen von Schablonen-Rohren(93) und Schablonen-Bolzen(94) an den möglichen Stempel-Positionen(95) erzielt werden. Die dafür treibende Kraft wird vom Pendelwerk(18) über das Synchronisations-Rohr(98) auf die Schablonen-Ringe(96) des Kodierwerks(17) übertragen. Das Pendelwerk(18) besteht aus dem Pendelring(116), dem langen_Pendelschaft(117), dem kurzen_Pendelschaft(118), dem sekundären_Drehgelenk(119), der Schwungmasse(120) und der einer Mechanik, welche das Synchronisations-Rohr(98) an seinem unteren Ende umgibt und dafür sorgt, dass das Synchronisations-Rohr(98) stets in dieselbe Richtung gedreht wird, unabhängig davon, in welchem Drehsinn sich der Pendelring(116) bewegt. Im Sinne dieser Beschreibung handelt es sich um ein doppeltes Pendel mit zwei Drehlagern, zum einen der Pendelring(116), welcher sich um das Synchronisations-Rohr(98) bewegt und zum anderen die Schwungmasse(120), die sich über den kurzen_Pendelschaft(118) um das sekundäre_Drehgelenk(119) bewegt. Durch die zufällige oder auch willkürliche Bewegung der Erfindung wird die Schwungmasse(120) des Pendelwerks(18) beschleunigt und schließlich der Pendelring(116) in Rotation versetzt. Um den gleichsinnigen Rotationssinn am Synchronisations-Rohr(98) zu gewährleisten, sorgt ein zweiteiliges Getriebe für die Koppelung der Rotationsbewegung zwischen dem Pendelring(116) und dem Synchronisations-Rohr(98). Auf der oberen, den Schablonen-Ringen(96) näheren Seite des Pendelwerks(18) ist das Synchronisations-Rohr(98) vom oberen_Zacken-Rad(121) umfasst und fest mit diesem verbunden. Dieses obere_Zacken-Rad(121) entspricht in seiner Geometrie einer Scheibe mit Zahnrad-ähnlichem Aussehen. Im Unterschied zu einem Zahnrad besitzt es aber keine symmetrischen Zähne, sondern es ist auf der Mantelfläche seines zylindrischen Grundkörpers regelmäßig mit kleinen Rampen-förmig hervorstehenden Ausbuchtungen versehen, die sich der Art gestalten, dass sie sich in ihrer Formgebung langsam steigend von der Kreisform der Mantelfläche erheben, um schließlich wieder steil gegen die Mantelfläche abzufallen. Dabei steht die gegen die Mantelfläche steil abfallende Fläche eines Zacken senkrecht zur Tangentialebene der Schnittgeraden der Mantelfläche des Grundzylinders und der steil abfallenden Fläche eines Zacken. Insgesamt finden sich an der inneren Mantelfläche des Pendelrings(116) sechs Hakenelemente(124 und 125), welche jeweils aus dem Träger und dem Widerhaken(128) bestehen. Der Träger eines Hakenelements(124 und 125) entspricht einem flachen Rechteck-Profil, das in seinem Ursprung fest mit der Innenseite des Pendelrings(116) verbunden ist und an seinem, dem Synchronisations-Rohr(98) zugewandten Seite Kreis förmig abgerundet ist. Durch den Mittelpunkt seines Rundung-Kreises führt ein fest mit dem Träger verbundener Achszylinder(131), der als Drehlager für die Haken-Feder(129) dient. Nahe der inneren Wandung des Pendelrings(116) führt ein Zylinder-förmiger Ring-Bolzen(130) senkrecht von der Oberfläche des Träger weg, um dem einen Ende der Haken-Feder(129) ein Widerlager zu sein. Die Widerhaken ihrerseits entsprechen in ihrer Geometrie einem Zylinder mit tangential wegführendem Rechteck-Profil. Der Zylinder ist in seiner Symmetrieachse durchbohrt, so, dass er sich frei um den Achszylinder(131) drehen kann. Außerdem ist der Zylinder auf halber Höhe soweit eingefräst, dass er um den Achszylinder(131) rotieren kann und gleichzeitig nicht mit dem Rechteck-Profil des Trägers in Berührung kommt. Zwischen dem Pendelring(116) und dem oberen_Zacken-Rad(121) sind nun drei in ihrer Bauart gleiche, von oben betrachtet rechtsläufige-Hakenelemente(124) angebracht, deren Widerhaken(128) bei Rotation des Pendelrings(116) im Uhrzeigersinn den langsam steigenden Flanken der Zacken entlang gleiten und so keine Drehkraft auf das Synchronisations-Rohr(98) ausüben. Dreht sich der Pendelring(116) bei Betrachtung der Erfindung von oben im Gegenuhrzeigersinn, dann werden die Widerhaken(128) durch die Federkraft der Haken-Federn(129), die sich mit ihrem einen Ende gegen den Ring-Bolzen(130) stemmen, sich frei drehbar um den Achszylinder(131) wickeln und mit ihrem anderen Ende am Widerhaken(128) fest verankert sind, gegen die mit Zacken belegte Mantelfläche des oberen_Zacken-Rads(121) gedrückt. In der Folge zeigt die rechteckige Kopf-Fläche am freien, dem Drehpunkt fernen Ende eines Widerhaken gegen die steil abfallende Fläche eines Zacken auf der Mantelfläche des oberen_Zacken-Rads(121) und stellt in dieser Position eine kraft schlüssige Verbindung zwischen dem Pendelring(116) und dem Synchronisations-Rohr(98) her. Als Konsequenz daraus dreht sich das Synchronisations-Rohr(98) mit dem Pendelring(116) im Gegenuhrzeigersinn.

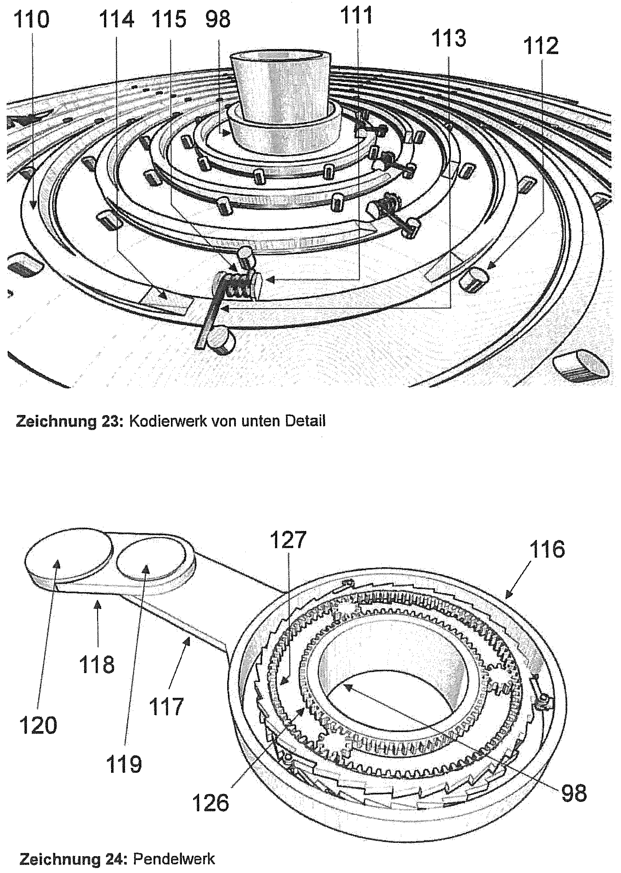

In analoger Weise sind zwischen dem Pendelring(116) und dem unteren_Zacken-Rad(122) drei linksläufige Hakenelemente(124) angebracht. Das unteren_Zacken-Rad(122) entspricht in seiner Bauweise exakt jener des oberen_Zacken-Rads(121), mit dem Unterschied, dass es um eine Achse, die senkrecht zur Achse seines Grundzylinders steht, um 180 Grad gedreht wurde. Die Zacken des oberen_Zacken-Rads(121) verlaufen im Uhrzeigersinn, jene des unteren_Zacken-Rads(122) im Gegenuhrzeigersinn. Damit ist durch die Gleichartigkeit des Mechanismus definiert, dass die unteren Widerhaken(128) genau dann in die Zacken des unteren_Zacken-Rads(122) greifen, wenn sich der Pendelring(116) im Uhrzeigersinn dreht. Diese Rotation im Uhrzeigersinn bedeutet, dass sich das oberen_Zacken-Rad(121) nicht dreht und somit eine Drehung des Synchronisations-Rohrs(98) nur noch über die Rotation des unteren_Zacken-Rads(122) vermitteln lässt. Hinzu kommt die Forderung, dass sich das Synchronisations-Rohr(98) immer im Gegenuhrzeigersinn drehen soll, was der Vorgabe der festen Koppelung des oberen_Zacken-Rads(121) an das Synchronisations-Rohr(98) entspricht. Um dies sicher zu stellen, ist das unteren_Zacken-Rad(122) über ein Planetengetriebe mit dem Synchronisations-Rohr(98) gekoppelt (Zeichnung 24). Das Planetengetriebe hat die Eigenschaft, dass das treibende Hohlrad nach Vermittlung der frei drehbaren, aber in der Position fixierten Planetenräder(123), das Sonnenrad in entgegengesetzter Richtung drehen lässt. Dabei entspricht das Hohlrad des Planetensatzes der Innen-Verzahnung(127) des unteren_Zacken-Rads(122) und das Sonnenrad der Außen-Verzahnung(126) des Synchronisations-Rohrs(98). Mit dieser ausgewählten Anordnung ist sicher gestellt, dass sich das Synchronisations-Rohrs(98) stets im Gegenuhrzeigersinn dreht, unabhängig davon, welcher Drehsinn vom Pendelring(116) ausgeht.

## Patentansprüche

1. Tragbarer, mechanischer Passwortgenerator mit determiniertem Speicher, so dass nach manueller Einstellung eines mehrstelligen Zugangscodes durch Drehung an einem Stellrad (1) ein mehrstelliges Passwort mechanisch erzeugt und angezeigt wird, wobei der mechanische Passwortgenerator mindestens ein Verwischerwerk (13), ein Trommelwerk (14) und ein Stellwerk (15) als mechanische Baugruppen umfasst, und wobei das Verwischerwerk (13) ein Stellrad (1) umfasst, **dadurch gekennzeichnet,**
**dass** das Trommelwerk (14) zylinderförmige Zeichen-Trommeln (19) umfasst, die auf sich Zeichen und/oder Zahlen tragen, die das Passwort darstellen, und die an Drehachsen (26) konzentrisch, in jeweils kleiner werdenden Kreisbahnen oder Ringen auf Trommel-Bahnen (44, 43, 42, 41, 40, 39) angeordnet sind, wobei die Anzahl der zylinderförmige Zeichen-Trommeln (19) von äussersten Ring nach innen abnimmt,
**dass** sechs Stelltriebe (4, 5, 6, 7, 8, 9) des Stellwerkes (15) mit dem Stellrad (1) derart mechanisch gekoppelt sind, dass jedem der sechs Stelltriebe (4,5,6,7,8,9) eine der Trommel-Bahnen (44, 43, 42, 41, 40, 39) zugeordnet ist und durch Rotation zusammen mit der Rotation des Stellrads (1) eine Bewegung der Zeichen-Trommeln (19) erzeugen, wobei zur mechanischen Koppelung zur Vermittlung der Drehbewegung am Stellrad (1) auf eine der Trommel-Bahnen (44, 43, 42, 41, 40, 39) entsprechend einer der Stelltriebe von außen gegen die Gehäusewand gedrückt wird, wodurch eine durchgehende Verbindung entsteht, welche die Drehung am Stellrad(1) auf die entsprechende gekoppelte Trommel-Bahn (44, 43, 42, 41, 40, 39) überträgt.

2. Tragbarer, mechanischer Passwortgenerator nach Anspruch 1, **dadurch gekennzeichnet, dass** das Stellrad(1) in seiner Geometrie einer kreisförmigen Ringscheibe(81) entspricht, deren innerer Radius grösser ist, als der äusserste Radius des Trommelbahn-Körpers (73) der äussersten Trommel-Bahn (44).

3. Tragbarer, mechanischer Passwortgenerator nach Anspruch 2, **dadurch gekennzeichnet, dass** das Stellrad(1) ein Sichtfenster(12) in der kreisförmigen Ringscheibe des Stellrads(1) umfasst, das eine definierte Positionseinstellung des Stellrads erzeugt, indem es eine Sicht auf einen oberen Rand eines unbeweglichen Gehäuserahmens (86) umfassend einer aufgemalten oder eingravierten Zahlenskala umfasst.

4. Tragbarer, mechanischer Passwortgenerator nach Anspruch 3, **dadurch gekennzeichnet, dass** der mechanischer Passwortgenerator einen Einrast-Mechanismus umfasst, mittels dessen durch manuelle Drehung am Stellrad getroffen Positionen gehalten werden.

5. Tragbarer, mechanischer Passwortgenerator nach einem der Ansprüche 1 bis 4, **dadurch gekennzeichnet, dass** jede der Zeichen-Trommeln (19) auf einer eigenen, L-förmigen Halterung (25) montiert und durch eine Drehachse (26), die durch das durchbohrte Zentrum eines Zeichen-Zylinders (23) führt, frei drehbar ist.

## Claims

1. Portable mechanical password generator having a determined memory, such that a multi-digit password is mechanically generated and displayed after manually setting a multi-digit access code by rotating an adjusting wheel (1), wherein the mechanical password generator comprises at least one blurring mechanism (13), a drum mechanism (14) and an interlocking mechanism (15) as mechanical components, and wherein the blurring mechanism (13) comprises an adjusting wheel (1), **characterised in that**
the drum mechanism (14) comprises cylindrical sign drums (19) which bear signs and/or numbers on them which constitute the password, and which are arranged concentrically on rotational axes (26) in circular orbits or rings, each becoming smaller, on drum paths (44, 43, 42, 41, 40, 39), wherein the number of cylindrical sign drums (19) decreases inwardly from the outermost ring,
six adjusting devices (4, 5, 6, 7, 8, 9) of the adjusting mechanism (15) are mechanically coupled to the adjusting wheel (1) in such a way that one of the drum paths (44, 43, 42, 41, 40, 39) is allocated to each of the six adjusting devices (4, 5, 6, 7, 8, 9) and generate a movement of the sign drums (19) by rotation together with the rotation of the adjusting wheel (1), wherein, for the mechanical coupling for conveying the rotational movement on the adjusting wheel (1) onto one of the drum paths (44, 43, 42, 41, 40, 39) corresponding to one of the adjusting mechanisms, the housing wall is pressed against from outside, whereby a consistent connection emerges which transfers the rotation on the adjusting wheel (1) to the corresponding coupled drum path (44, 43, 42, 41, 40, 39).

2. Portable mechanical password generator according to claim 1, **characterised in that** the adjusting wheel (1) corresponds to a circular ring disc (81) in terms of its geometry, the inner radius of which is greater than the outermost radius of the drum path body (73) of the outermost drum path (44).

3. Portable mechanical password generator according to claim 2, **characterised in that** the adjusting wheel (1) comprises a viewing window (12) in the circular ring disc of the adjusting wheel (1), said viewing window generating a defined position setting of the adjusting wheel by it comprising a view of an upper edge of an immoveable housing frame (86) comprising a painted or engraved numerical scale.

4. Portable mechanical password generator according to claim 3, **characterised in that** the mechanical password generator comprises a latching mechanism by means of which positions achieved by manual rotation on the adjusting wheel are held in place.

5. Portable mechanical password generator according to one of claims 1 to 4, **characterised in that** each of the symbol drums (19) is mounted on a single L-shaped bracket (25) and can be freely rotated by a rotational axis (26) which leads through the pierced centre of a symbol cylinder (23).

## Revendications

1. Générateur de mot de passe mécanique, portable, avec une mémoire déterminée, de sorte qu'après un réglage manuel d'un code d'accès à plusieurs caractères, un mot de passe à plusieurs caractères est généré mécaniquement par la rotation d'une molette de réglage (1) et est affiché, où le générateur de mot de passe mécanique comprend au moins un mécanisme d'effacement (13), un mécanisme de type tambour (14) et un mécanisme de réglage (15) en tant que composants mécaniques, et où le mécanisme d'effacement (13) comprend une molette de réglage (1), **caractérisé en ce**
**que** le mécanisme de type tambour (14) comprend des tambours de caractères (19) en forme de cylindres qui portent des caractères et/ou des chiffres qui représentent le mot de passe, et qui sont disposés sur des axes de rotation (26) de manière concentrique en bandes circulaires ou en anneaux devenant respectivement plus petits sur des bandes de tambour (44, 43, 42, 41, 40, 39), où le nombre de tambours de caractères (19) en forme de cylindres diminue de l'anneau le plus à l'extérieur vers le centre,
**que** six mécanismes de réglage (4, 5, 6, 7, 8, 9) du mécanisme de réglage (15) sont couplés mécaniquement de telle manière avec la molette de réglage (1) qu'une des bandes de tambour (44, 43, 42, 41, 40, 39) est associée à chacun des six mécanismes de réglage (4, 5, 6, 7, 8, 9), et qui, par la rotation conjointe avec la rotation de la molette de réglage (1), génèrent un déplacement des tambours de caractères (19), où, pour le couplage mécanique permettant la transmission du mouvement de rotation à la molette de réglage(1), un des mécanismes de réglage est pressé vers l'extérieur contre la paroi de boitier sur une des bandes de tambour (44, 43, 42, 41, 40, 39), ce par quoi une liaison traversante est constituée, laquelle transmet la rotation sur la molette de réglage (1) à la bande de tambour (44, 43, 42, 41, 40, 39) couplée correspondante.

2. Générateur de mot de passe mécanique, portable, selon la revendication 1, **caractérisé en ce que** la molette de réglage (1) correspond au niveau de sa géométrie à un disque circulaire (81) en forme de cercle, dont le rayon intérieur est supérieur au rayon le plus à l'extérieur du corps de bande de tambour (73) de la bande de tambour (44) la plus à l'extérieur.

3. Générateur de mot de passe mécanique, portable, selon la revendication 2, **caractérisé en ce que** la molette de réglage (1) comprend un regard (12) dans le disque circulaire en forme de cercle de la molette de réglage (1) qui génère un réglage de la position défini de la molette de réglage, **en ce qu'**elle comprend une vue sur un bord supérieur d'un cadre de boitier (86) immobile comprenant une échelle de chiffres peints ou gravés.

4. Générateur de mot de passe mécanique, portable, selon la revendication 3, **caractérisé en ce que** le générateur de mot de passe mécanique comprend un mécanisme de verrouillage au moyen duquel des positions trouvées par une rotation manuelle sur la molette de réglage sont maintenues.

5. Générateur de mot de passe mécanique, portable, selon l'une des revendications 1 à 4, **caractérisé en ce que** chacun des tambours de caractères (19) est monté sur un support (25) en forme de L propre et peut être mis en rotation librement par un axe de rotation(26) qui passe à travers le centre percé d'un cylindre de caractère (23).
